# EUROPÄISCHE PATENTSCHRIFT

(11) **EP 4 124 441 B1**
(45) Veröffentlichungstag und Bekanntmachung des Hinweises auf die Patenterteilung: **12.03.2025**
(21) Anmeldenummer: 22184819.5
(22) Anmeldetag: 13.07.2022
(51) Int. Cl.: B29C 55/02, B29C 53/32

(54) **FOLIENAUFWICKELSYSTEM, VERBUND AUS EINER FOLIENRECKANLAGE UND EINEM SOLCHEN FOLIENAUFWICKELSYSTEM UND VERWENDUNG EINES SOLCHEN VERBUNDS ZUR HERSTELLUNG VON DÜNNSTFILMEN UND MEMBRANEN**
FILM WINDING SYSTEM, COMPOSITE COMPRISING A FILM STRETCHING SYSTEM AND SUCH A FILM WINDING SYSTEM AND USE OF SUCH A COMPOSITE FOR THE PRODUCTION OF THIN FILM FILMS AND MEMBRANES
SYSTÈME D'ENROULEMENT DE FEUILLE, ENSEMBLE COMPOSÉ D'UNE INSTALLATION D'ÉTIRAGE DE FEUILLE ET D'UN TEL SYSTÈME D'ENROULEMENT DE FEUILLE ET UTILISATION D'UN TEL ENSEMBLE POUR LA FABRICATION DE FEUILLES MINCES ET DE MEMBRANES

(30) Priorität: 29.07.2021 DE 102021119724
(43) Veröffentlichungstag der Anmeldung: 01.02.2023
(73) Patentinhaber: Brückner Maschinenbau GmbH, 83313 Siegsdorf (DE)
(72) Erfinder: Eder, Christoph, 83059 Kolbermoor (DE); Gumpinger, Helmut, 83454 Anger (DE); Eichner, Berthold, 510 Changhua County (TW); Kellnberger, Florian, 85567 Grafing (DE)
(74) Vertreter: Flach Bauer & Partner Patentanwälte mbB

(56) Entgegenhaltungen:
- WO-A1-2013/075258
- DE-A1- 3 600 517
- US-A- 3 279 718

## Beschreibung

Die Erfindung betrifft ein Folienaufwickelsystem, einen Verbund aus einer Folienreckanlage und einem solchen Folienaufwickelsystem und eine Verwendung eines solchen Verbunds zur Herstellung von biaxial verstreckten Dünnstfilmen, insbesondere aber auch Batterieseparatorfolien, einer PPK-Folie (PP-Kondensatorfolie) oder einer PETK-Folie (PET-Kondensatorfolie) oder von Membranen, wie z.B. PTFE-Membrane (Polytetrafluorethylen). Die PPK-Folie und die PETK-Folie sind vorzugsweise BO-verstreckt. Dünnstfilme haben Dicken, die vorzugsweise kleiner sind als 5µm.

Folienreckanlagen dienen dazu, um aus einer Kunststoffschmelze eine Folienbahn herzustellen, die bestimmte Materialeigenschaften aufweist, um für bestimmte Zwecke eingesetzt werden zu können. Die Folienreckanlagen umfassen dabei Reckstufen in Längsrichtung und/oder in Querrichtung. Die Anlagengeschwindigkeit nimmt immer mehr zu und beträgt heutzutage schon mehr als 400 m/min. Künftig sollen noch schnellere Folienreckanlagen in Betrieb genommen werden. In diesem Zusammenhang ist ein wichtiger Aspekt auch der, wie das fertige Ausgangsprodukt, nämlich die Folienbahn, aufgewickelt wird. Hierzu sind Folienaufwickelsysteme vorgesehen, die die produzierte Folienbahn aufwickeln. Beim Aufwickeln ist es allerdings wichtig, dass keine Falten in die Folienbahn reingedrückt werden, sodass sich die einzelnen Lagen später leichter wieder voneinander trennen lassen. Das Aufwickeln der Folienbahn erfolgt an einer Aufwickelstation. Diese umfasst einen entsprechenden Grundkörper, um welchen die Folienbahn herumgewickelt wird. Die Folienbahn wird einer intern bekannten Aufwickelstation allerdings über eine Kontaktwalze zugeführt, um eine optimale Ausrichtung vor dem Aufwickeln sicherzustellen.

Je nach Art der Folie, die hergestellt werden soll, müssen noch besondere Anlagenparameter eingehalten bzw. erreicht werden. Anspruchsvoll in der Herstellung sind Dünnstfilme, wie beispielsweise eine Batterieseparatorfolie. Im Gegensatz zu Folien, die beispielsweise aus PET oder PP bestehen, dürfen bei der Herstellung von Dünnstfilmen wie z.B. Batterieseparatorfolien nur geringe Folienzüge angelegt werden. Die Folienzüge liegen im Bereich von 1 N/m bis 200 N/m. Vorzugsweise liegen sie im Bereich von 5 N/m bis 15 N/m. Durch die viskoelastische Eigenschaft von Batterieseparatorfolien ist eine hohe Anpresskraft einer Kontaktwalze an den Folienballen (Wickelballen) bzw. an die Wickelhülse nicht möglich. So soll die Anpresskraft bevorzugt im Bereich von 0 N/m bis 100 N/m liegen. Weiter bevorzugt soll die Anpresskraft im Bereich von 1 N/m bis 10 N/m liegen. Ansonsten können Wickelfehler, zum Beispiel das Teleskopieren der Folienbahn auftreten. Diese gilt es zu vermeiden.

Die Herstellung von Batterieseparatorfolien ist beispielsweise in der DE 10 2019 112 089 und in der DE 10 2019 119 600 beschrieben, deren Inhalt bezüglich der Herstellung der Batterieseparatorfolien hiermit in diese Anmeldung aufgenommen wird.

Die DE 36 00 517 A1 offenbart eine Vorrichtung zum Aufwickeln von Warenbahnen. Die Vorrichtung weist drei Rollen auf, wobei die in Laufrichtung erste Rolle ortsfest ist. Die anderen beiden Rollen und sind mittels Schlitten auf einer Schiene nur gleichzeitig bewegbar und von einem Stellmotor angetrieben.

Grundsätzlich ist es schwierig, den niedrigen Folienzug und insbesondere die niedrige Anpresskraft einstellen zu können, weil das Gesamtsystem sehr träge ist und der Folienballen nicht ideal rund ist.

Es ist daher die Aufgabe der hier vorliegenden Erfindung ein Folienaufwickelsystem zu schaffen, mit welchem möglichst niedrige Folienzüge und eine möglichst niedrige Anpresskraft zwischen Kontaktwalze und Folienballen realisiert werden kann.

Die Aufgabe wird durch das Folienaufwickelsystem gemäß dem unabhängigen Anspruch 1 gelöst. Anspruch 14 gibt einen Verbund aus einer Folienreckanlage und dem Folienaufwickelsystem wieder. Anspruch 15 beschreibt die Verwendung des Verbunds um Dünnstfilme und Membrane herzustellen und aufzuwickeln. In den Ansprüchen 2 bis 13 werden Weiterbildungen des Folienaufwickelsystems beschrieben.

Das Folienaufwickelsystem umfasst einen Folieneintrittsbereich, über den eine aufzuwickelnde Folienbahn dem Folienaufwickelsystem zuführbar ist. Es ist weiterhin eine erste Aufwickelstation vorgesehen. Die erste Aufwickelstation ist in einer Aufwickelposition dazu ausgebildet, um die Folienbahn zu einem Folienballen aufzuwickeln. Es sind weiterhin eine Kontaktwalze und eine Tänzerwalze vorgesehen. Die Kontaktwalze ist (unmittelbar) benachbart zur ersten Aufwickelstation (wenn sich diese in der Aufwickelposition befindet) angeordnet und dazu ausgebildet, die Folienbahn zur ersten Aufwickelstation zu führen. Der Wortlaut "unmittelbar" ist dahingehend zu verstehen, dass die Kontaktwalze in Kontakt zu dem Folienballen steht bzw. dass lediglich die Folienbahn, die auf den Folienballen aufgewickelt wird, zwischen der Kontaktwalze und dem Folienballen verläuft. Zwischen der Kontaktwalze und dem Folienballen könnte allerdings auch noch ein Abstandsraum gebildet sein. Dieser Abstandsraum ist vorzugsweise kleiner als 1000 mm, 900 mm, 800 mm, 700 mm, 600 mm, 500 mm, 400 mm, 300 mm, 200 mm, 100 mm, 50 mm, 30 mm, 20 mm oder kleiner als 10 mm. Die Tänzerwalze ist in Bewegungsrichtung der Folienbahn vor der Kontaktwalze angeordnet und dazu ausgebildet, die Folienbahn zur Kontaktwalze zu führen und einen Folienzug einzustellen. Der Wortlaut "in Bewegungsrichtung der Folienbahn" ist dahingehend zu verstehen, dass ein bestimmter Bereich der Folienbahn zuerst über die Tänzerwalze läuft und erst im Anschluss daran über die Kontaktwalze. Weiterhin ist eine erste Verstelleinrichtung vorgesehen und dazu ausgebildet, um die Kontaktwalze in Richtung der Aufwickelstation oder weg von der Aufwickelstation zu verfahren, wodurch ein bestimmter Kontaktdruck zwischen der Kontaktwalze und dem Folienballen einstellbar ist. Es ist besonders vorteilhaft, dass die Verstelleinrichtung ein Schlittensystem umfasst. Das Schlittensystem kann beispielsweise ein Luftlagerschlittensystem oder ein hydrostatisches Lagerschlittensystem sein. Ein Luftlagerschlittensystem stellt einen Luftfilm zwischen einem Schlitten und einer Schiene her, wodurch der Schlitten gegenüber der Schiene ohne nennenswerte Reibung bewegt werden kann. Dadurch wird die Reibung bei Horizontalbewegung der Kontaktwalze minimiert und die Kontaktwalze kann besonders genau und feinfühlig positioniert werden. Alternativ kann die Kontaktwalze auch über eine Verstellspindel verfahren werden. Dadurch können besonders hohe Gewichte bewegt werden.

In einer Weiterbildung des Folienaufwickelsystems umfasst das Luftlagerschlittensystem der ersten Verstelleinrichtung eine erste Schiene und zumindest einen ersten Schlitten, der auf der ersten Schiene angeordnet ist. Der erste Schlitten umfasst Luftaustrittsöffnungen, die in Richtung der ersten Schiene gerichtet sind. Der erste Schlitten umfasst weiterhin einen Luftanschluss, um Druckluft zuführen zu können, die dann aus den Luftaustrittsöffnungen austritt, wodurch der erste Schlitten auf der ersten Schiene gleitend bewegbar ist.

In einer Weiterbildung des Folienaufwickelsystems umgreift der erste Schlitten die erste Schiene von zumindest drei Seiten. Dadurch wird eine besonders hohe Stabilität des Aufbaus erreicht. Grundsätzlich wäre es denkbar, dass die Luftaustrittsöffnungen auch auf mehr als einer Seite auf die erste Schiene gerichtet sind. Es wäre denkbar, dass die Luftaustrittsöffnungen ebenfalls auf drei unterschiedliche Seiten der ersten Schiene gerichtet sind. Dadurch wird eine besonders gute Stabilisierung des ersten Schlittens erreicht.

In einer Weiterbildung des Folienaufwickelsystems umfasst das Luftlagerschlittensystem der ersten Verstelleinrichtung eine zweite Schiene und zumindest einen zweiten Schlitten, der auf der zweiten Schiene angeordnet ist. Der zweite Schlitten umfasst Luftaustrittsöffnungen, die in Richtung der zweiten Schiene gerichtet sind. Der zweite Schlitten umfasst einen Luftanschluss, um Druckluft zuführen zu können. Die Druckluft tritt dann aus den Luftaustrittsöffnungen aus, wodurch der zweite Schlitten auf der zweiten Schiene gleitend bewegbar ist. Die zweite Schiene verläuft parallel zu ersten Schiene. Grundsätzlich kann der zweite Schlitten der zweiten Schiene die gleichen Eigenschaften aufweisen wie der erste Schlitten der ersten Schiene. Durch Einsatz einer zweiten Schiene mit einem zweiten Schlitten kann das Gewicht der Kontaktwalze besser verteilt werden und die Kontaktwalze kann stabiler gehalten werden.

In einer Weiterbildung des Folienaufwickelsystems umfasst das Luftlagerschlittensystem der ersten Verstelleinrichtung einen dritten Schlitten, der auf der ersten Schiene angeordnet ist. Der dritte Schlitten umfasst Luftaustrittsöffnungen, die in Richtung der ersten Schiene gerichtet sind. Der dritte Schlitten umfasst einen Luftanschluss, um Druckluft zuführen zu können, die dann aus den Luftaustrittsöffnungen austritt, wodurch der dritte Schlitten auf der ersten Schiene gleitend bewegbar ist. Die erste Schiene hat einen durchgehenden Verlauf oder ist in zwei beabstandete Teilschienen für den ersten und den dritten Schlitten aufgeteilt. Durch Einsatz von zwei Schlitten, die vorzugsweise koaxial zueinander verschiebbar sind, kann die Stabilität, mit welcher die Kontaktwalze Verfahren wird, weiter erhöht werden.

In einer Weiterbildung des Folienaufwickelsystems umfasst die erste Verstelleinrichtung ein erstes und ein zweites Radialluftlager. Die Kontaktwalze umfasst im Bereich der ersten und der zweiten Stirnseite erste und zweite Walzenzapfen, die in dem ersten und zweiten Radialluftlager oder in dem ersten und zweiten hydrostatischen Lager (Hydraulik) gelagert sind. Dadurch wird die Reibung beim Drehen der Kontaktwalze weiter vermindert. Vorzugsweise wird die Kontaktwalze einzig durch die Folienbahn, die auf der Kontaktwalze anliegt, in eine Drehbewegung versetzt. In einem Ausführungsbeispiel könnte daher auf den Einsatz eines Elektromotors verzichtet werden. In einem anderen Ausführungsbeispiel ist die Kontaktwalze dennoch über einen Elektromotor antreibbar. Dieser Elektromotor ist direkt an der Kontaktwalze angeordnet oder über Kraftübertragungsmittel, wie z.B. eine Kette, mit der Kontaktwalze verbunden. Eine Drehung der Welle des Elektromotors führt dann auch zu einer Drehung der Kontaktwalze.

In einer Weiterbildung des Folienaufwickelsystems umfasst die erste Verstelleinrichtung einen Linearmotor, der dazu ausgebildet ist, um die Kontaktwalze über das Luftlagerschlittensystem oder das hydrostatische Lagerschlittensystem in Richtung der ersten Aufwickelstation oder weg von der ersten Aufwickelstation zu bewegen. Mittels eines solchen Linearmotors in Kombination mit dem Luftlagerschlittensystem oder dem hydrostatischen Lagerschlittensystem kann die Kontaktwalze sehr genau positioniert werden. Alternativ umfasst die erste Verstelleinrichtung einen Elektromotor, der dazu ausgebildet ist, die Verstellspindel zu drehen, wodurch die Kontaktwalze in Richtung der ersten Aufwickelstation oder weg von der ersten Aufwickelstation bewegbar ist.

In einer Weiterbildung des Folienaufwickelsystems ist eine Steuervorrichtung vorgesehen, die dazu ausgebildet ist, um den Linearmotor oder den Elektromotor der ersten Verstelleinrichtung derart anzusteuern, dass die Kontaktwalze mit einem vorbestimmten Anpressdruck an dem Folienballen anliegt. Grundsätzlich kann hierfür noch ein entsprechender Drucksensor vorgesehen sein, der den Anpressdruck misst.

In einer Weiterbildung des Folienaufwickelsystems ist eine erste Umlenkwalze vorgesehen. Die erste Umlenkwalze ist in Bewegungsrichtung der Folienbahn vor der Tänzerwalze angeordnet. Durch die entsprechende erste Umlenkwalze kann der Umschlingungsgrad, über den die Folienbahn an der Tänzerwalze anliegt, erhöht werden. Gleichzeitig wird die Folienbahn beruhigt. Unter einem "Umschlingungsgrad" ist ein Wert zu verstehen, wie weit die Folienbahn die Tänzerwalze überdeckt. Die Tänzerwalze erstreckt sich über 360°. Bei einem Umschlingungsgrad von 90° würde die Folienbahn lediglich auf einem Viertel der Mantelfläche der insbesondere zylinderförmigen Tänzerwalze anliegen. Bei einem Umschlingungsgrad von 180° würde die Folienbahn dagegen auf der Hälfte der Mantelfläche der insbesondere zylinderförmigen Tänzerwalze anliegen.

In einer Weiterbildung des Folienaufwickelsystems ist ein Abstand zwischen der ersten Umlenkwalze und der Kontaktwalze kleiner als ein Abstand zwischen der Tänzerwalze und der Kontaktwalze. Dadurch kann ein Umschlingungsgrad, über den die Folienbahn die Tänzerwalze überdeckt, erreicht werden, der größer ist als 120°, 130°, 140° oder größer ist als 150°.

In einer Weiterbildung des Folienaufwickelsystems ist die erste Umlenkwalze mittels Radialluftlager oder hydrostatischem Lager drehbar gelagert. Durch die niedrige Reibung zwischen Umlenkwalze und Radialluftlager bzw. hydrostatischem Lager wird die erste Umlenkwalze vorzugsweise lediglich durch die Folienbahn selbst in eine Drehbewegung versetzt, sodass in einem Ausführungsbeispiel auf den Einsatz eines Elektromotors verzichtet werden kann. In einem anderen Ausführungsbeispiel ist die erste Umlenkwalze dennoch über einen Elektromotor antreibbar. Dieser Elektromotor ist direkt an der ersten Umlenkwalze angeordnet oder über Kraftübertragungsmittel, wie z.B. eine Kette, mit der ersten Umlenkwalze verbunden. Eine Drehung der Welle des Elektromotors führt dann auch zu einer Drehung der ersten Umlenkwalze.

In einer Weiterbildung des Folienaufwickelsystems ist eine zweite Umlenkwalze vorgesehen. Die zweite Umlenkwalze ist in Bewegungsrichtung der Folienbahn nach der Tänzerwalze und vor der Kontaktwalze angeordnet.

In einer Weiterbildung des Folienaufwickelsystems ist die zweite Umlenkwalze ebenfalls mittels Radialluftlager oder hydrostatischem Lager drehbar gelagert. Durch die niedrige Reibung zwischen Umlenkwalze und Radialluftlager bzw. hydrostatischem Lager wird die zweite Umlenkwalze vorzugsweise lediglich durch die Folienbahn selbst in eine Drehbewegung versetzt, sodass in einem Ausführungsbeispiel auf den Einsatz eines Elektromotors verzichtet werden kann. In einem anderen Ausführungsbeispiel ist die zweite Umlenkwalze dennoch über einen Elektromotor antreibbar. Dieser Elektromotor ist direkt an der zweiten Umlenkwalze angeordnet oder über Kraftübertragungsmittel, wie z.B. eine Kette, mit der zweiten Umlenkwalze verbunden. Eine Drehung der Welle des Elektromotors führt dann auch zu einer Drehung der zweiten Umlenkwalze.

In einer Weiterbildung des Folienaufwickelsystems ist ein Kontaktwalzengestell vorgesehen. Das Luftlagerschlittensystem oder das hydrostatische Lagerschlittensystem der ersten Verstelleinrichtung ist auf dem Kontaktwalzengestell angeordnet, sodass die Kontaktwalze gegenüber dem Kontaktwalzengestell verfahrbar ist. Alternativ hierzu ist das Kontaktwalzengestell auf dem Luftlagerschlittensystem oder dem hydrostatischen Lagerschlittensystem der ersten Verstelleinrichtung angeordnet, wobei die Kontaktwalze auf dem Kontaktwalzengestell angeordnet ist, sodass die Kontaktwalze und das Kontaktwalzengestell gemeinsam verfahrbar sind.

In einer Weiterbildung des Folienaufwickelsystems sind die erste Umlenkwalze und/oder die zweite Umlenkwalze und/oder die Tänzerwalze auf dem Kontaktwalzengestell angeordnet. Wird das Kontaktwalzengestell über die erste Verstelleinrichtung verfahren, so gilt dies auch für die erste und/oder zweite Umlenkwalze bzw. die Tänzerwalze. Dadurch erfolgt eine synchrone Bewegung.

In einer Weiterbildung des Folienaufwickelsystems ist eine Basisverstelleinrichtung vorgesehen, die ein Basisgestell und ein Luftlagerschlittensystem oder ein hydrostatisches Lagerschlittensystem oder eine Verstellspindel umfasst. Die Kontaktwalze und die Tänzerwalze und die erste Umlenkwalze und/oder die zweite Umlenkwalze sind auf dem Basisgestell angeordnet. Die Basisverstelleinrichtung ist dazu ausgebildet, um die Kontaktwalze, die Tänzerwalze, die erste Umlenkwalze und/oder die zweite Umlenkwalze in Richtung der Aufwickelstation oder weg von der Aufwickelstation zu verfahren. In diesem Fall liegt sowohl die erste Verstelleinrichtung vor und gleichzeitig noch eine übergeordnete Basisverstelleinrichtung, sodass eine besonders genaue Einstellung vorgenommen werden kann.

In einer Weiterbildung des Folienaufwickelsystems ist eine zweite Verstelleinrichtung vorgesehen und dazu ausgebildet, um die Tänzerwalze in Richtung der Kontaktwalze oder weg von der Kontaktwalze zu verfahren, wodurch ein bestimmter Folienzug einstellbar ist. Die zweite Verstelleinrichtung umfasst ein Luftlagerschlittensystem oder ein hydrostatisches Lagerschlittensystem oder eine Verstellspindel. Es ist besonders vorteilhaft, dass auch die Tänzerwalze mit einem Luftlagerschlittensystem verfahren wird. Aufgrund des niedrigen Reibungskoeffizienten kann der Folienzug sehr präzise eingestellt werden.

In einer Weiterbildung des Folienaufwickelsystems umfasst die zweite Verstelleinrichtung einen Linearmotor oder einen Elektromotor, der dazu ausgebildet ist, die Tänzerwalze über das Luftlagerschlittensystem bzw. das hydrostatische Lagerschlittensystem oder die Verstellspindel in Richtung der Kontaktwalze oder weg von der Kontaktwalze zu bewegen. Über einen solchen Linearmotor oder Elektromotor kann eine sehr genaue Einstellung von Position und Kraft vorgenommen werden.

In einer Weiterbildung des Folienaufwickelsystems ist eine Steuervorrichtung vorgesehen, die dazu ausgebildet ist, den Linearmotor oder den Elektromotor der zweiten Verstelleinrichtung derart anzusteuern, dass über die Tänzerwalze ein vorbestimmter Folienzug aufgebracht wird.

In einer Weiterbildung des Folienaufwickelsystems ist die Tänzerwalze mittels Radialluftlager oder hydrostatischem Lager drehbar gelagert. Durch die niedrige Reibung zwischen Tänzerwalze und Radialluftlager bzw. hydrostatischem Lager wird die Tänzerwalze vorzugsweise lediglich durch die Folienbahn selbst in eine Drehbewegung versetzt, sodass in einem Ausführungsbeispiel auf den Einsatz eines Elektromotors verzichtet werden kann. In einem anderen Ausführungsbeispiel ist die Tänzerwalze dennoch über einen Elektromotor antreibbar. Dieser Elektromotor ist direkt an der Tänzerwalze angeordnet oder über Kraftübertragungsmittel, wie z.B. eine Kette, mit der Tänzerwalze verbunden. Eine Drehung der Welle des Elektromotors führt dann auch zu einer Drehung der Tänzerwalze.

In einer Weiterbildung des Folienaufwickelsystems umfasst die erste Aufwickelstation einen Grundkörper, wobei der Grundkörper der ersten Aufwickelstation in eine Rotationsbewegung versetzbar ist und wobei die Folienbahn um den Grundkörper herum aufwickelbar ist. Es gibt weiterhin eine zweite Aufwickelstation mit einem Grundkörper, wobei der Grundkörper der zweiten Aufwickelstation in eine Rotationsbewegung versetzbar ist und wobei die Folienbahn um den Grundkörper herum aufwickelbar ist. Die erste Aufwickelstation ist dazu ausgebildet, um von der Aufwickelposition, in welcher sie benachbart zu der Kontaktwalze angeordnet ist, in eine Abladeposition verschwenkt zu werden, wobei der aufgewickelte Folienballen in der Abladeposition von der ersten Aufwickelstation entfernbar ist, wobei die zweite Aufwickelstation dazu ausgebildet ist, zur selben Zeit von der Abladeposition in die Aufwickelposition verschwenkt zu werden. Es gibt weiterhin eine Schneideeinrichtung, die dazu ausgebildet ist, die Folienbahn dann über ihre Breite durchzuschneiden, wenn die erste Aufwickelstation in Richtung der Abladeposition verschwenkt wird, wobei die zweite Aufwickelstation dazu ausgebildet ist, derart weiter in die Aufwickelposition verschwenkt zu werden, sodass der Grundkörper der zweiten Aufwickelstation sofort mit dem nun entstehenden neuen Anfang der Folienbahn in Kontakt gelangt.

In einem weiteren Ausführungsbeispiel umfasst das Folienaufwickelsystem zumindest eine Entladevorrichtung. Die Entladevorrichtung ist im Bereich der Folienbahn angeordnet und dazu ausgebildet, elektrische Ladung auf der Folienbahn und/oder dem Folienballen abzubauen.

Die Entladevorrichtung umfasst vorzugsweise eine Vielzahl von biegsamen/frei beweglichen elektrisch leitfähigen Metallstreifen (eine Art Lamettastreifen), die in Kontakt mit der Folienbahn bringbar sind. Diese Metallstreifen sind vorzugsweise über die gesamte Breite der Folienbahn bzw. über die überwiegende Breite der Folienbahn verteilt angeordnet. Grundsätzlich könnte auch ein Entlade-Leiter verwendet werden. Dieser bzw. diese Entlade-Leiter wären vorzugsweise beabstandet zur Folienbahn angeordnet. Der Abstand sollte vorzugsweise weniger als 200 mm, 150 mm, 100 mm, 50 mm, 40 mm, 30 mm, 20 mm, 10 mm oder weniger als 5 mm betragen. Vorzugsweise ist der Abstand allerdings größer als 5 mm. An diesem Entlade-Leiter wird ein elektrisches Wechselfeld angelegt. Bei diesem elektrischen Wechselfeld handelt es sich um eine Hochspannung, wodurch die statische Ladung abgeführt wird.

Der erfindungsgemäße Verbund aus dem Folienaufwickelsystem und einer Folienreckanlage, insbesondere einer aus dem Stand der Technik bekannten sequentiellen Reckanlage, einer Simultanreckanlage oder einer Batterieseparatorfolien-Reckanlage (Evapore-Prozess oder WET-Prozess) erlaubt, dass das Folienaufwickelsystem an einen Ausgangsbereich der Folienreckanlage angeschlossen wird. Die Folienreckanlage umfasst einen Eingangsbereich, an welchem ihr eine Folie zuführbar ist. Weiterhin umfasst die Folienreckanlage verschiedene Zonen, in denen die Kunststofffolie aufgeheizt und zu einer mono- oder biaxial orientierten Folienbahn gereckt wird (zum Beispiel über eine Längsreck-Stufe und/oder über eine Querreck-Stufe bzw. Ofen). Die daraus entstehende Folienbahn wird dann dem Folienaufwickelsystem zugeführt. In einem WET-Prozess enthält die Gießfolie ein Lösemittel (z.B. Weißöl), wobei die Gießfolie MD- und TD-verstreckt (sequentiell oder simultan) wird. Im Anschluss wird die verstreckte Folie (Film) in ein Auswaschbad eingeführt. In dem Auswaschbad wäscht das darin enthaltene Dichlormethan das Lösemittel (z.B. Weißöl) aus. Anschließend wird der Film nochmals in eine TDO eingeführt, um diesen nochmals minimal zu verstrecken bzw. einer Wärmebehandlung (Annealing) zu unterziehen. Anschließend wird der Film aufgewickelt.

Die Verwendung des Verbunds erlaubt, dass Dünnstfilme, wie z.B. Batterieseparatorfolien, PPK-Folien oder PETK-Folien oder Membrane, wie z.B. PTFE-Membrane herstellbar und aufwickelbar sind. Die Filme können auch bei einer Dicke von weniger als 15 µm aufgewickelt werden. Batterieseparatorfolien haben meist eine Dicke im Bereich von 8 bis 15 µm und PPK-Folien von 2 bis 6 µm.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: einen Verbund aus einem Folienaufwickelsystem und einer Folienreckanlage;
- Figur 2:: ein Ausführungsbeispiel des Folienaufwickelsystems mit einer Tänzerwalze und einer Kontaktwalze;
- Figur 3:: ein Ausführungsbeispiel des Folienaufwickelsystems, wobei der Einsatz einer ersten und einer zweiten Aufwickelstation erläutert wird;
- Figur 4:: ein weiteres Ausführungsbeispiel des Folienaufwickelsystems mit einer Tänzerwalze, einer Kontaktwalze und zwei Umlenkwalzen;
- Figur 5:: ein weiteres Ausführungsbeispiel des Folienaufwickelsystems aus Figur 4 in räumlicher Darstellung;
- Figur 6:: ein Ausführungsbeispiel eines Luftlagerschlittensystems;
- Figur 7:: ein Ausführungsbeispiel eines Radialluftlagers;
- Figur 8:: ein Ausführungsbeispiel der Kontaktwalze, die an einem Kontaktwalzengestell gelagert ist, welches auf dem Luftlagerschlittensystem angeordnet ist;
- Figur 9:: ein Ausführungsbeispiel des Folienaufwickelsystems, wobei die Kontaktwalze, die erste und die zweite Umlenkwalze und die Tänzerwalze über das Luftlagerschlittensystem der ersten Verstelleinrichtung gemeinsam verfahrbar sind;
- Figur 10:: ein Ausführungsbeispiel des Folienaufwickelsystems, wobei die Kontaktwalze, die erste Umlenkwalze und die Tänzerwalze über das Luftlagerschlittensystem der ersten Verstelleinrichtung gemeinsam verfahrbar sind;
- Figur 11:: ein Ausführungsbeispiel des Folienaufwickelsystems, wobei die Kontaktwalze, die erste Umlenkwalze, die zweite Umlenkwalze und die Tänzerwalze gemeinsam auf einem Basisgestell angeordnet und gemeinsam über eine Basisverstelleinrichtung verfahrbar sind;
- Figur 12:: ein Ausführungsbeispiel des Folienaufwickelsystems, wobei die Kontaktwalze, die erste Umlenkwalze und die Tänzerwalze gemeinsam auf einem Basisgestell angeordnet und gemeinsam über eine Basisverstelleinrichtung verfahrbar sind;
- Figur 13:: ein Ausführungsbeispiel des Folienaufwickelsystems, wobei die Kontaktwalze, die erste Umlenkwalze, die zweite Umlenkwalze und die Tänzerwalze gemeinsam auf einem Basisgestell angeordnet und gemeinsam über eine Basisverstelleinrichtung verfahrbar sind und wobei ein Umschlingungsgrad der Folienbahn über die Kontaktwalze ungefähr 60° beträgt; und
- Figur 14:: ein Ausführungsbeispiel des Folienaufwickelsystems, wobei die Kontaktwalze, die erste Umlenkwalze, die zweite Umlenkwalze und die Tänzerwalze gemeinsam auf einem Basisgestell angeordnet und gemeinsam über eine Basisverstelleinrichtung verfahrbar sind und wobei ein Umschlingungsgrad der Folienbahn über die Kontaktwalze ungefähr 180° beträgt.

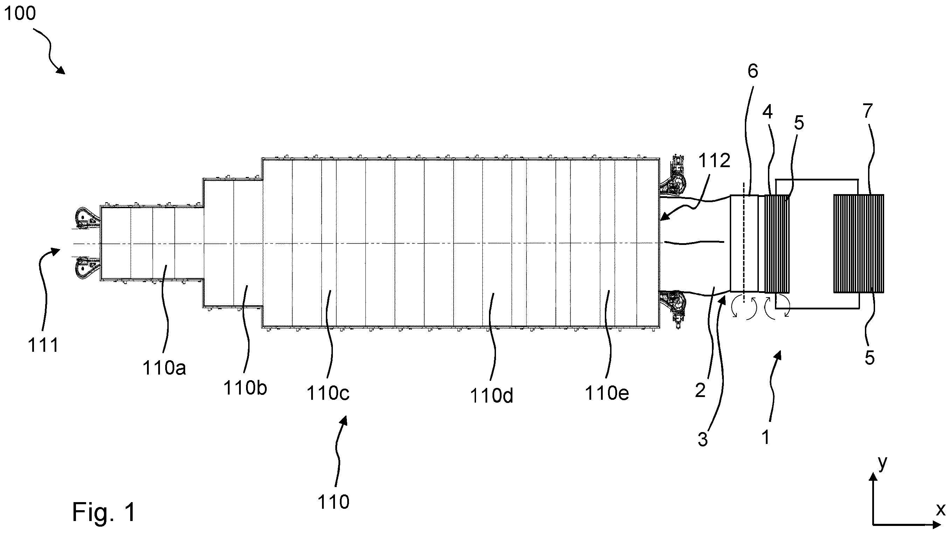

Figur 1 zeigt einen Verbund 100 aus einem erfindungsgemäßen Folienaufwickelsystem 1 und einer Folienreckanlage 110. Die Folienreckanlage 110 kann als Längsreckanlage oder Querreckanlage oder sequenzielle Reckanlage mit einer Längsreck-Stufe und einer Querreck-Stufe oder als Simultanreckanlage ausgebildet sein. Die Folienreckanlage 110 dient zum Herstellen einer Kunststofffolienbahn 2, die nachfolgend auch als Folienbahn 2 bezeichnet wird. Hierfür ist die Folienreckanlage 110 in verschiedene Zonen 110a, 110b, 110c, 110d und 110e aufgeteilt. Selbstverständlich müssen nicht alle diese Zonen 110a, 110b, 110c, 110d und 110e tatsächlich vorhanden sein. In den verschiedenen Zonen 110a bis 110e ist die Folienbahn 2 unterschiedlichen Temperaturen ausgesetzt, um gewisse Folieneigenschaften zu generieren oder einzustellen. Die erste Zone 110a wird dabei auch als Vorheizzone bezeichnet. Die zweite Zone 110b wird als Reckzone bezeichnet, wohingegen die dritte Zone 110c als Weiterheizzone bezeichnet wird. Die vierte Zone 110d wird auch als Neutralzone bezeichnet und die fünfte Zone 110e als Kühlzone. Grundsätzlich können sich zwischen den einzelnen Zonen 110a bis 110e noch weniger oder weitere Neutralzonen befinden, um eine Trennung der Zonen 110a bis 110e sicherzustellen, sodass sich die einzelnen Zonen 110a bis 110e weniger stark beeinflussen (die Luft strömt von einer Zone 110a bis 110e in die andere). Mit der Folienreckanlage 110 ist es möglich, Folienbahnen mit einer Breite herzustellen, die größer ist als 2 m, 3 m, 4 m, 5 m, 6 m, 7 m, 8 m, 9 m, 10 m, 11 m oder größer als 12 m, aber die vorzugsweise kleiner ist als 13 m, 12 m, 11 m, 10 m, 9 m, 8 m, 7 m, 6 m, 5 m, 4 m oder kleiner ist als 3 m.

Die Folienreckanlage 110 umfasst einen Eingangsbereich 111, wobei der Folienreckanlage 110 an ihrem Eingangsbereich 111 eine zu reckende Folie zuführbar ist. Am Ende der Folienreckanlage 110, also an ihrem Ausgangsbereich 112, tritt die gereckte Folienbahn 2 aus. Der Ausgangsbereich 112 der Folienreckanlage 110 ist mit einem Folieneintrittsbereich 3 des erfindungsgemäßen Folienaufwickelsystems 1 verbunden.

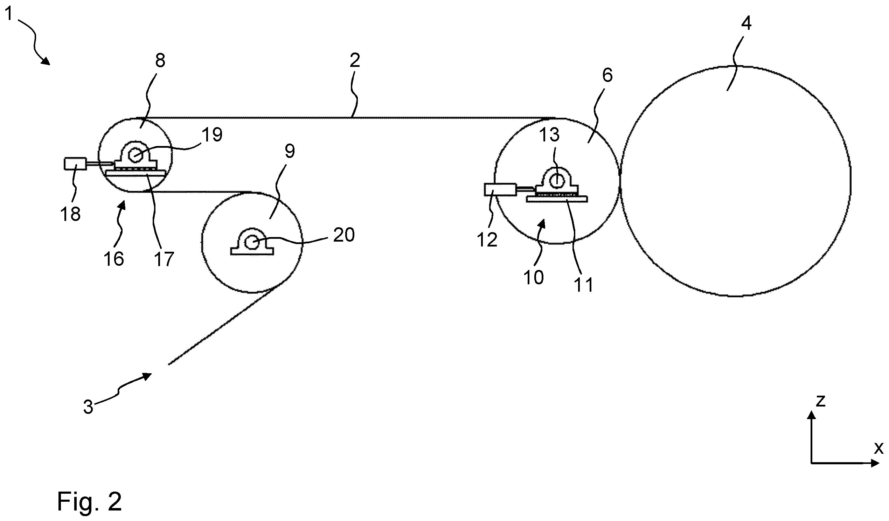

In den nachfolgenden Figuren 2A, 2B, 3A bis 3E und 4 wird der Aufbau des erfindungsgemäßen Folienaufwickelsystems 1 näher beschrieben.

Wie eingangs ausgeführt, sollten unterschiedliche Folientypen unterschiedlich aufgewickelt werden, weil nur dann sichergestellt ist, dass das Aufwickeln faltenfrei erfolgt und genügend Luft zwischen die einzelnen Lagen eingebracht wird, damit in späteren Prozessschritten ein Abwickeln der Folienbahn 2 problemlos möglich ist. Auch wird durch die erfindungsgemäße Art des Aufwickelns sichergestellt, dass die Folienbahn 2 nicht einreißt.

Wie eingangs erwähnt ist das Aufwickeln von Batterieseparatorfolien besonders anspruchsvoll. So darf das Aufwickeln nur mit einer geringen Anpresskraft und einem geringen Folienzug erfolgen.

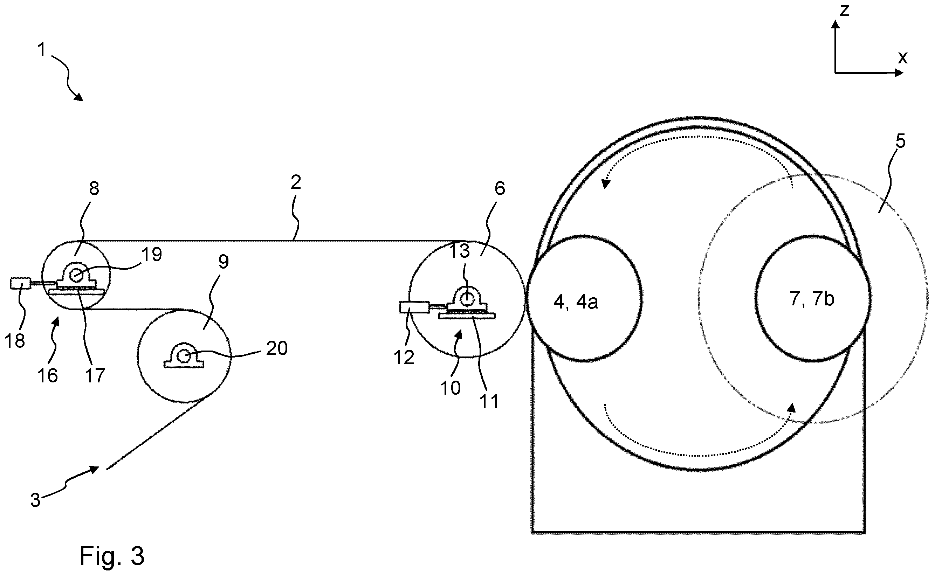

Die Figuren 2, 3, 4, 5 zeigen Ausführungsbeispiele, die das Folienaufwickelsystem 1 beschreiben. Die Folienbahn 2 wird von der Folienreckanlage 110 dem Folienaufwickelsystem 1 zugeführt. Dies erfolgt über den Folieneintrittsbereich 3. Die Folienbahn 2 verläuft dann in Richtung einer ersten Aufwickelstation 4, die sich in einer Aufwickelposition befindet. Die erste Aufwickelstation 4 ist dazu ausgebildet, um die Folienbahn 2 zu einem Folienballen 5 (siehe Figur 3) aufzuwickeln.

Das Folienaufwickelsystem 1 umfasst eine Kontaktwalze 6 und eine Tänzerwalze 8. Die Kontaktwalze 6 ist benachbart zur ersten Aufwickelstation 4 angeordnet und dazu ausgebildet, die Folienbahn 2 zur ersten Aufwickelstation 4 zu führen. Die Tänzerwalze 8 ist in Bewegungsrichtung der Folienbahn 2 vor der Kontaktwalze 6 angeordnet und dazu ausgebildet, die Folienbahn 2 zur Kontaktwalze 6 zu führen und einen Folienzug einzustellen.

Dargestellt ist ebenfalls noch eine erste Umlenkwalze 9, die in Bewegungsrichtung der Folienbahn 2 vor der Tänzerwalze 8 angeordnet ist. Die Folienbahn 2 wird über den Folieneintrittsbereich 3 der ersten Umlenkwalze 9 zugeführt. Von der ersten Umlenkwalze 9 verläuft die Folienbahn 2 über die Tänzerwalze 8 hin zur Kontaktwalze 6 bevor sie an der ersten Aufwickelstation 4 zu einem Folienballen 5 aufgewickelt wird.

Es gibt weiterhin eine erste Verstelleinrichtung 10 die dazu ausgebildet ist, um die Kontaktwalze 6 in Richtung (X-Achse) der Aufwickelstation 4 oder weg von der Aufwickelstation 4 zu verfahren. Dadurch kann ein vorbestimmter Kontaktdruck zwischen der Kontaktwalze 6 und dem Folienballen 5 eingestellt werden. Ist der Kontaktdruck oberhalb eines ersten Schwellwerts, so wird die Kontaktwalze 6 von dem Folienballen 5 weg verfahren. Ist der Kontaktdruck unterhalb eines zweiten Schwellwerts, so wird die Kontaktwalze 6 in Richtung des Folienballen 5 verfahren. Der erste und der zweite Schwellwert können gleich oder verschieden sein. Die erste Verstelleinrichtung 10 umfasst dabei ein Schlittensystem. Bei dem Schlittensystem handelt es sich bevorzugt um ein Luftlagerschlittensystem 11. Das Schlittensystem könnte auch ein hydrostatisches Lagerschlittensystem sein. Dadurch kann die Kontaktwalze 6 mit minimalem Energieaufwand verschoben werden, weil insbesondere der Ruck, um die Kontaktwalze 6 aus einer Ruheposition heraus initial zu bewegen, aufgrund einer Luftlagerung minimal ist.

Die erste Verstelleinrichtung 10 umfasst noch einen Linearmotor 12, der dazu ausgebildet ist, um die Kontaktwalze 6 über das Luftlagerschlittensystem 11 in Richtung der ersten Aufwickelstation 4 oder weg von der ersten Aufwickelstation 4 zu bewegen. Die Bewegung erfolgt vorzugsweise lediglich horizontal (parallel zum Boden).

Es gibt weiterhin eine Steuervorrichtung (nicht dargestellt), die dazu ausgebildet ist, um den Linearmotor 12 der ersten Verstelleinrichtung 10 derart anzusteuern, dass die Kontaktwalze 6 mit einem vorbestimmten Anpressdruck an dem Folienballen 5 anliegt.

Die erste Verstelleinrichtung 10 umfasst außerdem ein erstes und ein zweites Radialluftlager 13. Die Kontaktwalze 6 umfasst im Bereich der ersten und zweiten Stirnseite 14 erste und zweite Walzenzapfen 15. Diese sind in dem ersten und zweiten Radialluftlager 13 gelagert. Dadurch könnte auf einen separaten elektrischen Motor zum Antrieb der Kontaktwalze 6 verzichtet werden. Die Kontaktwalze 6 wird bevorzugt lediglich durch den Folienzug der Folienbahn 2 in Rotation versetzt. Grundsätzlich wäre der Einsatz eines elektrischen Motors aber weiterhin möglich. Anstelle des ersten und zweiten Radialluftlagers 13 können auch hydrostatische Lager eingesetzt werden.

Es ist weiterhin eine zweite Verstelleinrichtung 16 vorgesehen und dazu ausgebildet, um die Tänzerwalze 8 in Richtung der Kontaktwalze 6 oder weg von der Kontaktwalze 6 zu verfahren, wodurch ein bestimmter Folienzug einstellbar ist. Soll der Folienzug erhöht werden, so wird die Tänzerwalze 8 weg von der Kontaktwalze 6 verfahren. Dadurch wird die Folie gestrafft. Soll der Folienzug dagegen verringert werden, so wird die Tänzerwalze 8 in Richtung der Kontaktwalze 6 verfahren.

Die zweite Verstelleinrichtung 16 umfasst ebenfalls ein Luftlagerschlittensystem 17. Dadurch kann die Tänzerwalze 8 mit minimalem Energieaufwand verschoben werden, weil insbesondere der Ruck, um die Tänzerwalze 8 aus einer Ruheposition heraus initial zu bewegen, aufgrund einer Luftlagerung minimal ist. Die zweite Verstelleinrichtung 16 könnte auch ein hydrostatisches Lagerschlittensystem umfassen.

Die zweite Verstelleinrichtung 16 umfasst außerdem einen Linearmotor 18. Dieser ist dazu ausgebildet, um die Tänzerwalze 8 über das Luftlagerschlittensystem 17 in Richtung der Kontaktwalze 6 oder weg von der Kontaktwalze 6 zu bewegen. Die Bewegung erfolgt vorzugsweise lediglich horizontal (parallel zum Boden).

Es ist außerdem eine Steuervorrichtung (nicht dargestellt) vorgesehen, die dazu ausgebildet ist, um den Linearmotor 18 der zweiten Verstelleinrichtung 16 derart anzusteuern, dass über die Tänzerwalze 8 ein vorbestimmter Folienzug aufbringbar ist. Der Folienzug kann über eine Kraftmesseinrichtung gemessen werden.

Die Steuervorrichtung zur Ansteuerung des Linearmotors 12 der zweiten Verstelleinrichtung 16 kann auch dazu verwendet werden, um den Linearmotor 12 der ersten Verstelleinrichtung 10 anzusteuern. Es können allerdings auch zwei verschiedene Steuervorrichtungen (zum Beispiel in verschiedenen Mikrokontrollen) verwendet werden.

Vorzugsweise ist die Tänzerwalze 8 ebenfalls mittels Radialluftlager 19 drehbar gelagert. Die Tänzerwalze 8 kann auch mittels eines hydrostatischen Lagers drehbar gelagert sein. Weiter vorzugsweise ist die Tänzerwalze 8 nicht aktiv angetrieben. Sie wird vorzugsweise lediglich passiv durch die Folienbahn 2 angetrieben. Grundsätzlich wäre der Einsatz eines elektrischen Motors zum Antreiben der Tänzerwalze 8 aber möglich.

Die erste Umlenkwalze 9 kann vorzugsweise nicht gegenüber der Tänzerwalze 8 und/oder der Kontaktwalze 6 verfahren werden. Die erste Umlenkwalze 9 ist vorzugsweise ebenfalls mittels eines Radialluftlagers 20 drehbar gelagert. Die erste Umlenkwalze 9 kann auch mittels eines hydrostatischen Lagers drehbar gelagert sein. Die erste Umlenkwalze 9 wird vorzugsweise lediglich passiv, also ohne einen Elektromotor angetrieben. Dies erfolgt lediglich durch den Folienzug der Folienbahn 2. Grundsätzlich wäre der Einsatz eines elektrischen Motors zum Antreiben der ersten Umlenkwalze 9 aber möglich.

Im Hinblick auf Figur 3 ist noch gezeigt, dass die erste Aufwickelstation 4 einen Grundkörper 4a umfasst. Der Grundkörper 4a der ersten Aufwickelstation 4 ist in eine Rotationsbewegung versetzbar. Dies kann beispielsweise über einen (Elektro-)Motor erfolgen. Bei dem Grundkörper 4a kann es sich im einfachsten Fall um ein (hohl-)zylinderförmiges Kartonstück handeln. Bevorzugt ist der Grundkörper 4a allerdings aus Metall oder CFK, GFK oder Verbund aus CFK und GFK. Weiterhin ist noch eine zweite Aufwickelstation 7 dargestellt. Die zweite Aufwickelstation 7 umfasst ebenfalls einen Grundkörper 7a. Dieser Grundkörper 7a ist ebenfalls in eine Rotationsbewegung versetzbar. So kann die Folienbahn 2 auch um den Grundkörper 7a der zweiten Aufwickelstation 7 aufgewickelt werden. In den dargestellten Figuren ist die erste Aufwickelstation 4 in die Aufwickelposition verfahren. In der Aufwickelposition ist die erste Aufwickelstation 4 benachbart zu der Kontaktwalze 6 angeordnet. Die zweite Aufwickelstation 7 ist dagegen in eine Abladeposition verfahren bzw. verschwenkt. In der Abladeposition kann der Folienballen 5 von der jeweiligen, in diesem Fall zweiten Aufwickelstation 7 entnommen werden. In Figur 3 ist über Pfeile eingezeichnet, dass die erste Aufwickelstation 4 von der Aufwickelposition in die Abladeposition verfahrbar bzw. verschwenkbar ist. Gleichermaßen ist in diesem Fall die zweite Aufwickelstation 7 von der Abladeposition (nachdem der Folienballen 5 entfernt wurde) in die Aufwickelposition verfahrbar bzw. verschwenkbar. Die Bewegung von der Aufwickelposition in die Abladeposition und zurück in die Aufwickelposition ist vorzugsweise kreisförmig bzw. einer kreisförmigen Bewegung angenähert. Die Bewegung könnte auch verschiedene, bevorzugt bogenförmige Segmente umfassen, die aneinander anschließen bzw. durch gerade Abschnitte miteinander verbunden sind. Weiterhin ist eine Schneideeinrichtung (nicht dargestellt) vorgesehen. Die Schneideeinrichtung ist dazu ausgebildet, die Folienbahn 2 dann entlang ihrer gesamten Breite durchzuschneiden, wenn die erste bzw. zweite Aufwickelstation 4, 7 in Richtung der Abladeposition verschwenkt wird, wobei die jeweils andere Aufwickelstation 7, 4 dann dazu ausgebildet ist, derart weit in die Aufwickelposition verschwenkt zu werden, sodass der jeweilige Grundkörper 4a, 7a sofort mit dem nun entstandenen, abgeschnittenen neuen Anfang der Folienbahn 2 in Kontakt gelangt und diesen neuen Anfang an dem bereits in Rotation versetzten Grundkörper 4a, 7a aufwickelt. Die Schneideeinrichtung bewegt sich vorzugsweise schräg (in X-Richtung und Y-Richtung), um aufgrund der Bewegungsgeschwindigkeit der Folienbahn 2 einen geraden Schnitt in die Folienbahn 2 einzubringen. Die Schneideeinrichtung könnte sich aber auch gerade (lediglich in Y-Richtung) bewegen, wobei die Folienbahn 2 dann schräg abgeschnitten werden würde.

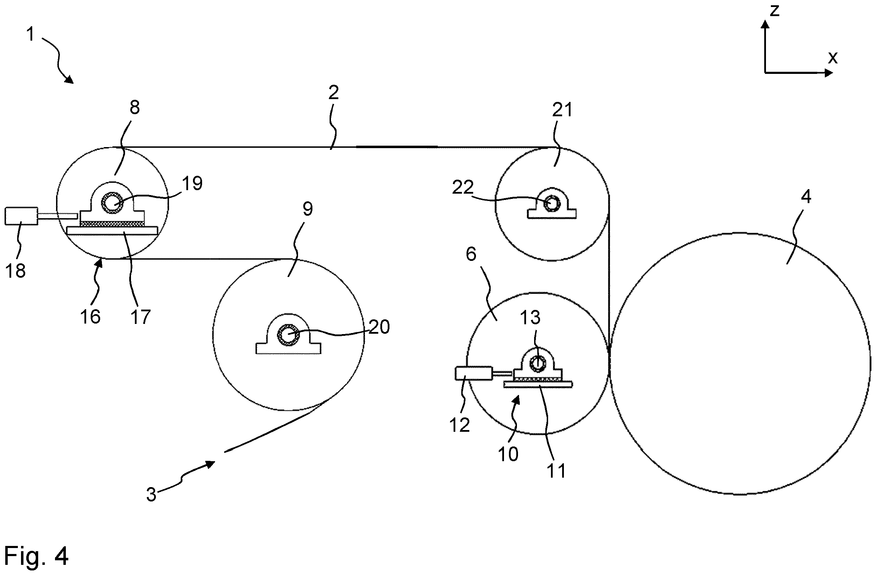

In Figur 4 ist eine zweite Umlenkwalze 21 gezeigt. Die zweite Umlenkwalze 21 ist in Bewegungsrichtung der Folienbahn 2 nach der Tänzerwalze 8 und vor der Kontaktwalze 6 angeordnet. Die zweite Umlenkwalze 21 ist vorzugsweise mittels Radialluftlager 22 drehbar gelagert. Sie könnte auch mit einem hydrostatischen Lager drehbar gelagert sein.

Die Folienbahn 2 verläuft vorzugsweise horizontal von der Tänzerwalze 8 zur zweiten Umlenkwalze 21.

Die zweite Umlenkwalze 21 ist vorzugsweise stationär angeordnet. Sie kann bevorzugt nicht gegenüber einer stillstehenden Kontaktwalze 6 und/oder Tänzerwalze 8 verfahren werden.

Die zweite Umlenkwalze 21 wird vorzugsweise lediglich passiv angetrieben. Dies bedeutet, dass die zweite Umlenkwalze 21 einzig über den Folienzug der Folienbahn 2 in Rotation versetzt wird. Auf einen Elektromotor wird bevorzugt verzichtet. Grundsätzlich wäre der Einsatz eines elektrischen Motors zum Antreiben der zweiten Umlenkwalze 21 aber möglich.

Vorzugsweise haben sowohl die Tänzerwalze 8 als auch die erste und zweite Umlenkwalze 9, 21 entsprechende Walzenzapfen, die an ihren Stirnseiten ausgebildet sind, mit denen sie in das jeweilige Radialluftlager 19, 20, 22 eingreifen.

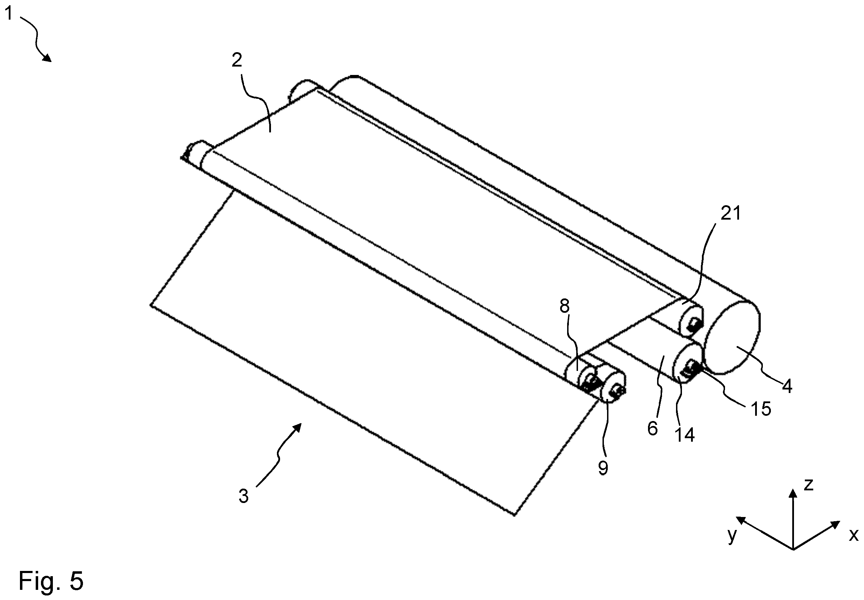

In Figur 5 ist ein räumliches Ausführungsbeispiel des Folienaufwickelsystems 1 gezeigt. Zu erkennen sind die erste Umlenkwalze 9, die Tänzerwalze 8, die zweite Umlenkwalze 21, die Kontaktwalze 6 und die erste Aufwickelstation 4.

In den jeweiligen Zeichnungsfiguren ist oftmals ein Koordinatensystem angegeben. In der X-Achse wird die Folienbahn 2 überwiegend bewegt. Natürlich umfasst der Bewegungsvektor der Folienbahn 2 neben einer Komponente in X-Richtung, zumindest abschnittsweise, auch eine Komponente in Z-Richtung. In Y-Richtung erstrecken sich die Walzen mit ihrer Längsrichtung.

Nicht dargestellt sind die jeweiligen Radialluftlager 13, 19, 20, 22.

Vorzugsweise ist ein Abstand zwischen der ersten Umlenkwalze 9 und der Kontaktwalze 6 kleiner als ein Abstand zwischen der Tänzerwalze 8 und der Kontaktwalze 6. Dadurch wird, wie in Figur 4 dargestellt, ein hoher Umschlingungsgrad der Folienbahn 2 über die Tänzerwalze 8 erreicht. In diesem Beispiel beträgt der Umschlingungsgrad ca. 180°.

Die zweite Umlenkwalze 21 ist vorzugsweise näher an der Kontaktwalze 6 angeordnet als die Tänzerwalze 8 und vorzugsweise auch näher an der Kontaktwalze 6 angeordnet als die erste Umlenkwalze 9.

Ein Durchmesser der ersten Umlenkwalze 9 entspricht ungefähr einem Durchmesser der zweiten Umlenkwalze 21, könnte aber auch kleiner als der Durchmesser der zweiten Umlenkwalze 21 sein. Der Wortlaut "ungefähr" umfasst Abweichungen von vorzugweise weniger als 5%. Ein Durchmesser der zweiten Umlenkwalze 21 könnte beispielsweise auch kleiner als ein Durchmesser der ersten Umlenkwalze 9 sein. Ein Durchmesser der Tänzerwalze 8 ist vorzugsweise kleiner als ein Durchmesser der ersten Umlenkwalze 9 und/oder der zweiten Umlenkwalze 21 und/oder der Kontaktwalze 6.

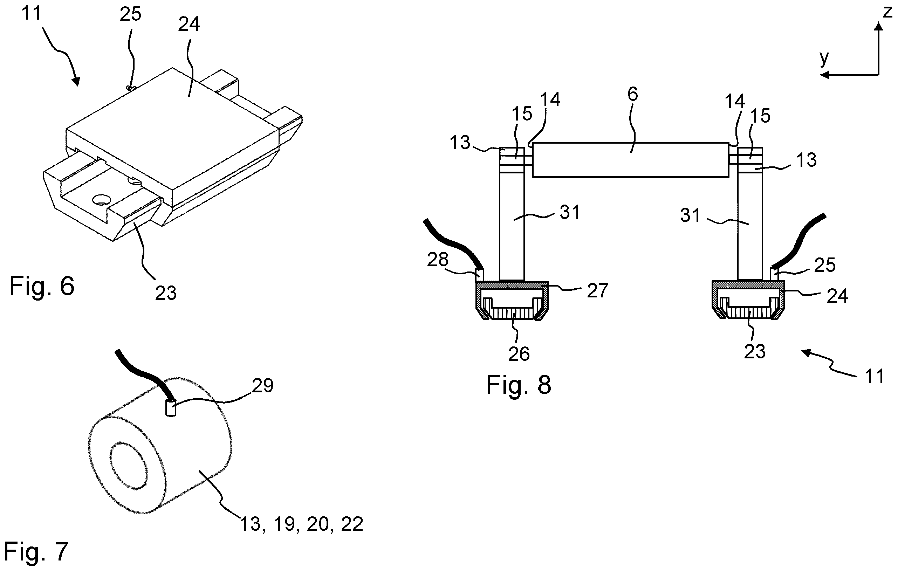

Nachfolgend wird Bezug auf die Figuren 6, 7 und 8 genommen. Das Luftlagerschlittensystem 11 der ersten Verstelleinrichtung 10 umfasst eine erste Schiene 23 und zumindest einen ersten Schlitten 24. Der zumindest eine erste Schlitten 24 ist auf der ersten Schiene 23 angeordnet. Der erste Schlitten 24 umfasst Luftaustrittsöffnungen, die in Richtung der ersten Schiene 23 gerichtet sind. Der erste Schlitten 24 umfasst weiterhin einen Luftanschluss 25, über den Druckluft zugeführt werden kann. Diese Druckluft tritt dann aus den Luftaustrittsöffnungen aus, wodurch der erste Schlitten 24 auf der ersten Schiene 23 gleitend bewegbar ist.

Vorzugsweise wird im Betrieb der erste Schlitten 24 von der ersten Schiene 23 angehoben, wie dies in Figur 8 gezeigt ist. Der Abstand zwischen der ersten Schiene 23 und dem ersten Schlitten 24 ist hier deutlich vergrößert dargestellt. Tatsächlich ist der Abstand lediglich wenige hundertstel Millimeter groß.

Die erste Schiene 23 kann zusätzlich aus einem Material bestehen oder ein solches umfassen, welches einen niedrigen Reibungskoeffizienten aufweist. Beispielsweise kann die erste Schiene 23 aus Polytetrafluorethylen bestehen oder solches umfassen.

Vorzugsweise umgreift der erste Schlitten 24 die erste Schiene 23 von zumindest drei Seiten. Die Enden des ersten Schlittens 24 sind vorzugsweise aufeinander zu gerichtet, sodass der erste Schlitten 24 vorzugsweise nicht vollständig von der ersten Schiene 23 abgehoben werden kann. Dadurch erfolgt eine Limitierung der Bewegung in Z-Richtung und auch eine Bewegung in Y-Richtung, also quer zur ersten Schiene 23, ist dadurch limitiert. Ein "Entgleisen" ist im Betrieb daher nicht möglich.

Vorzugsweise umfasst das Luftlagerschlittensystem 11 der ersten Verstelleinrichtung 10 noch eine zweite Schiene 26 und zumindest einen zweiten Schlitten 27. Der zweite Schlitten 27 umfasst Luftaustrittsöffnungen, die in Richtung der zweiten Schiene 26 gerichtet sind. Der zweite Schlitten 27 umfasst einen Luftanschluss 28, über den Druckluft zugeführt werden kann. Diese Druckluft tritt dann aus den Luftaustrittsöffnungen aus, wodurch der zweite Schlitten 27 auf der zweiten Schiene 26 gleitend bewegbar ist.

Die zweite Schiene 26 verläuft parallel zur ersten Schiene 23.

Grundsätzlich wäre es auch denkbar, dass das Luftlagerschlittensystem 11 der ersten Verstelleinrichtung 10 einen dritten Schlitten umfasst, der ebenfalls auf der ersten Schiene 23 angeordnet ist. Der dritte Schlitten würde dann ebenfalls Luftaustrittsöffnungen umfassen, die in Richtung der ersten Schiene 23 gerichtet sind. Der dritte Schlitten würde ebenfalls einen Luftanschluss umfassen, über den Druckluft zugeführt werden kann. Diese Druckluft tritt aus den Luftaustrittsöffnungen aus, wodurch der dritte Schlitten auf der ersten Schiene 23 gleitend bewegbar ist. Die erste Schiene 23 hat vorzugsweise einen durchgehenden Verlauf oder könnte auch in zwei beabstandete Teilschienen aufgeteilt sein. Auf der ersten Teilschiene würde der erste Schlitten 23 und auf der zweiten Teilschiene der dritte Schlitten angeordnet sein.

Selbiges kann auch für die zweite Schiene 26 des Luftlagerschlittensystems 11 der ersten Verstelleinrichtung 10 gelten. Auch hier könnte noch ein vierter Schlitten angeordnet sein. Die zweite Schiene 26 hat vorzugsweise einen durchgehenden Verlauf oder könnte auch in zwei beabstandete Teilschienen aufgeteilt sein.

Nichts anderes könnte auch für das Luftlagerschlittensystem 17 der zweiten Verstelleinrichtung 16 bezüglich der Tänzerwalze 8 gelten. Dieses Luftlagerschlittensystem 17 kann ebenfalls eine erste Schiene und zumindest einen ersten Schlitten umfassen, der auf der ersten Schiene angeordnet ist. Der erste Schlitten umfasst Luftaustrittsöffnungen, die in Richtung der ersten Schiene gerichtet sind.

Der erste Schlitten umfasst einen Luftanschluss, um Druckluft zuführen zu können, die dann aus den Luftaustrittsöffnungen austritt, wodurch der erste Schlitten auf der ersten Schiene gleitend bewegbar ist. Grundsätzlich könnte die zweite Verstelleinrichtung noch eine zweite Schiene mit einem zweiten Schlitten umfassen. Auf jeder Schiene können auch zwei Schlitten angeordnet sein.

In Figur 7 ist noch ein Ausführungsbeispiel eines Radialluftlagers 13, 19, 20, 22 dargestellt, an dem die einzelnen Walzen gelagert sein können. Das jeweilige Radialluftlager 13, 19, 20, 22 umfasst einen Luftanschluss 29 über den Druckluft zugeführt werden kann. Diese Druckluft strömt dann über Luftaustrittsöffnungen an der Innenseite des jeweiligen Radialluftlagers 13, 19, 20, 22 aus, wodurch die Reibung zwischen den jeweiligen Wellenzapfen 15 und dem jeweiligen Radialluftlager 13, 19, 20, 22 minimiert wird.

Das jeweilige Radialluftlager 13, 19, 20, 22 kann aus einem Material bestehen oder ein solches umfassen, welches einen niedrigen Reibungskoeffizienten aufweist. Beispielsweise kann die erste Schiene 23 aus Polytetrafluorethylen bestehen oder solches umfassen.

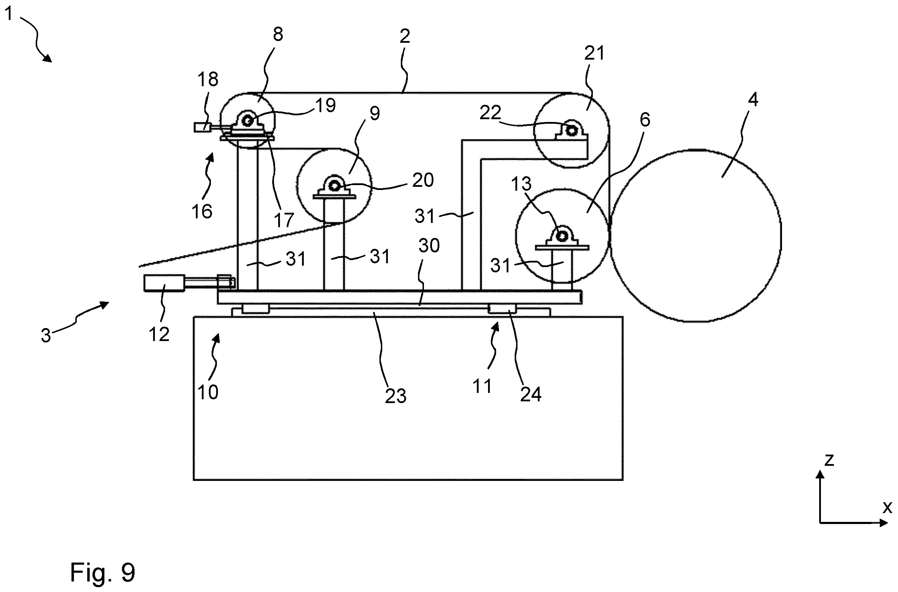

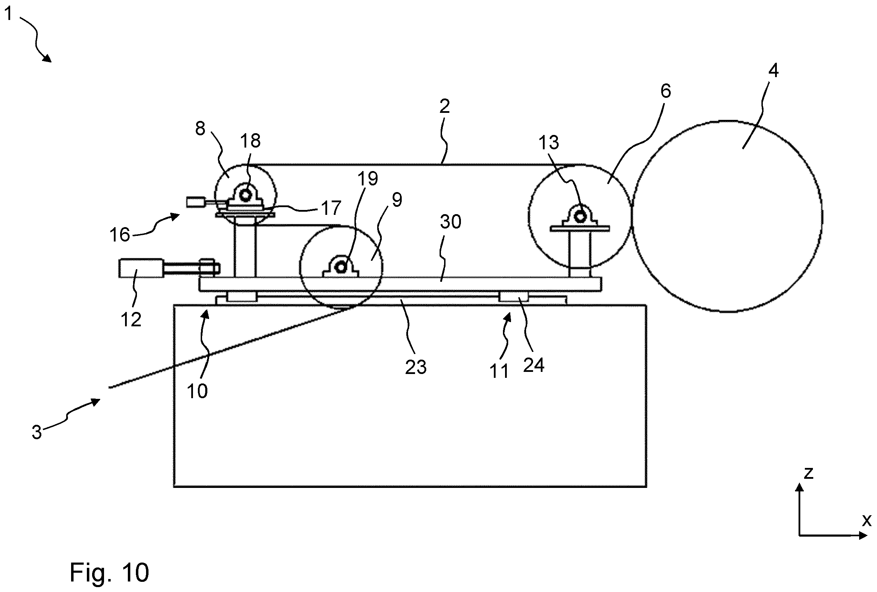

Die Figuren 9 und 10 zeigen ein weiteres Ausführungsbeispiel des Folienaufwickelsystems 1. In diesem Fall ist noch ein Kontaktwalzengestell 30 vorgesehen. Das Kontaktwalzengestell 30 ist auf dem Luftlagerschlittensystem 11 bzw. dem hydrostatischen Lagerschlittensystem der ersten Verstelleinrichtung 10 angeordnet. Die Kontaktwalze 6 ist ebenfalls auf dem Kontaktwalzengestell 30 angeordnet (z.B. über entsprechende Träger 31), sodass die Kontaktwalze 6 und das Kontaktwalzengestell 30 gemeinsam, also synchron, verfahrbar sind.

Weiterhin ist dargestellt, dass die erste Umlenkwalze 9 und die zweite Umlenkwalze 21 und die Tänzerwalze 8 ebenfalls auf dem Kontaktwalzengestell 30 angeordnet sind. Wird das Luftlagerschlittensystem 11 der ersten Verstelleinrichtung 10 betätigt, so wird ebenfalls die erste Umlenkwalze 9, die zweite Umlenkwalze 21 und die Tänzerwalze 8 verfahren. Das Verfahren erfolgt in diesem Fall synchron. Lediglich die Tänzerwalze 8 hat noch ihre zweite Verstelleinrichtung 16 mit ihrem Luftlagerschlittensystem 17 und kann unabhängig von der ersten Verstelleinrichtung 10 verfahren werden.

Der Bewegungsvektor des ersten Luftlagerschlittensystems 11 verläuft vorzugsweise ausschließlich in der X-Richtung, also in der Richtung, durch welche die Folienbahn 2 durch die Folienreckanlage 110 läuft. Der Bewegungsvektor könnte optional noch eine Komponente in Z-Richtung haben, also in Richtung des Bodens oder weg vom Boden. Der Bewegungsvektor ist vorzugsweise frei von einer Komponente in Y-Richtung.

In Figur 10 ist ein Ausführungsbeispiel des Folienaufwickelsystems 1 ohne die zweite Umlenkwalze 21 dargestellt. Die Folienbahn 2 verläuft im Wesentlichen horizontal von der Tänzerwalze 8 zur Kontaktwalze 6. Die erste Umlenkwalze 9 ist vorzugsweise näher am Kontaktwalzengestell 30 angeordnet als die Tänzerwalze 8 und die Kontaktwalze 6.

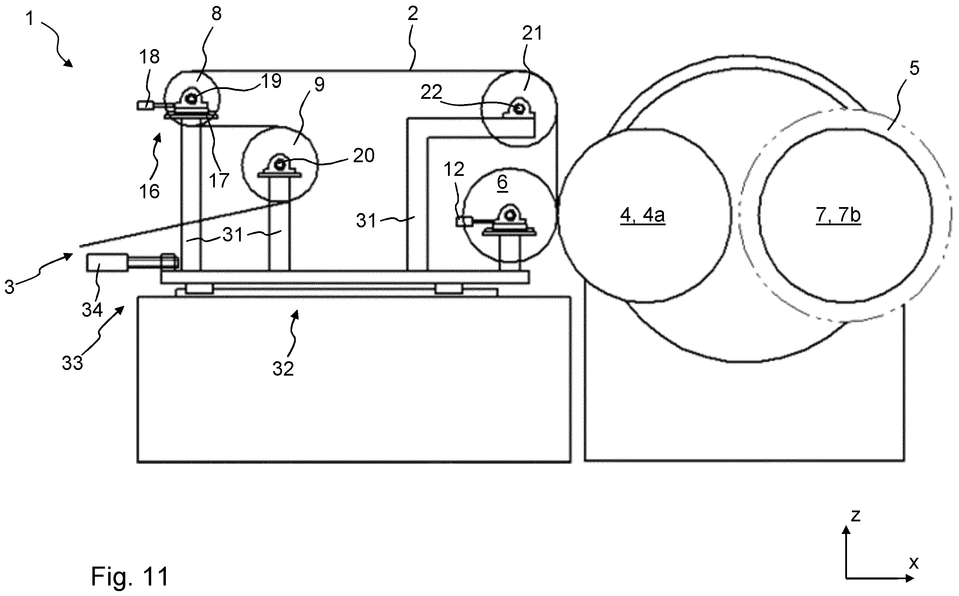

Figur 11 beschreibt ein Ausführungsbeispiel des Folienaufwickelsystems 1, wobei die Kontaktwalze 6, die erste Umlenkwalze 9, die zweite Umlenkwalze 21 und die Tänzerwalze 8 gemeinsam auf einem Basisgestell 32 angeordnet und gemeinsam über eine Basisverstelleinrichtung 33 verfahrbar sind. Die Basisverstelleinrichtung 33 umfasst in diesem Fall eine Verstellspindel 34. Über diese Verstellspindel 34 ist das Basisgestell 32 in Richtung der Aufwickelstation 4 oder weg von der Aufwickelstation 4 verfahrbar. Anstelle der Verstellspindel 34 könnte das Basisgestell 32 auch auf einem Luftlagerschlittensystem angeordnet sein, welches beispielsweise mittels eines Linearmotors bewegt wird. Gleichzeitig gibt es noch eine erste Verstelleinrichtung 10 und eine zweite Verstelleinrichtung 16. Dies bedeutet, dass die Kontaktwalze 6 und die Tänzerwalze 8 zusätzlich unabhängig von einer Bewegung des Basisgestells 32 verfahren werden können.

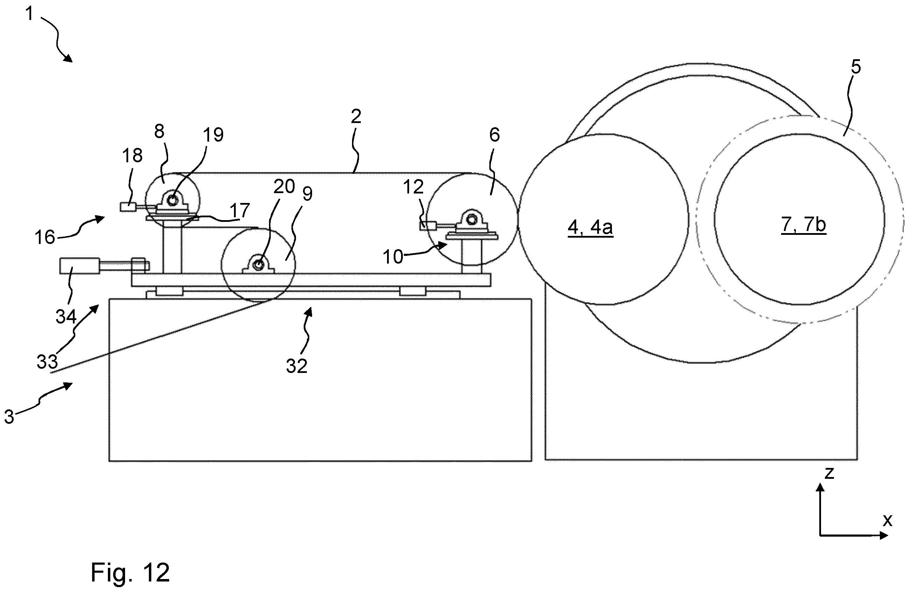

Figur 12 beschreibt ein Ausführungsbeispiel des Folienaufwickelsystems 1 wie es bereits aus Figur 11 bekannt ist. Im Unterschied zu Figur 11 umfasst das Folienaufwickelsystems 1 aus Figur 12 keine zweite Umlenkwalze 21. Vorzugsweise verläuft die Folienbahn 2 zwischen der Tänzerwalze 8 und der Kontaktwalze 6 horizontal, also parallel zum Boden.

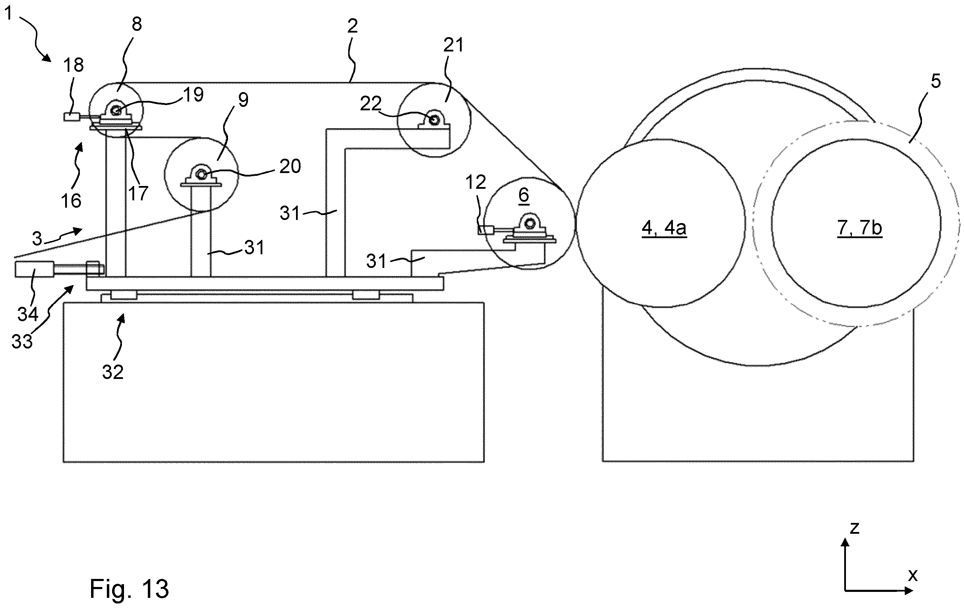

Figur 13 beschreibt ein Ausführungsbeispiel des Folienaufwickelsystems 1 wie es bereits aus Figur 11 bekannt ist. Im Unterschied zu Figur 11 verläuft die Folienbahn 2 zwischen der zweiten Umlenkwalze 21 und der Kontaktwalze 6 nicht lediglich in Vertikalrichtung, also senkrecht zum Boden, sondern sowohl mit einer Horizontalkomponente (Bewegungsvektor in X-Richtung) als auch mit einer Vertikalkomponente (Bewegungsvektor in Z-Richtung). Dadurch kann der Umschlingungsgrad der Folienbahn 2 über der Kontaktwalze 6 eingestellt werden. In dem Beispiel aus Figur 13 beträgt dieser ca. 60°. Der Umschlingungsgrad ist vorzugsweise größer als 0,5°, 5°, 10°, 15°, 20°, 25°, 30°, 35°, 40°, 45°, 50°, 55°, 60°, 65°, 70°, 75°, 80° oder größer als 85°. Der Umschlingungsgrad ist weiterhin vorzugsweise kleiner als 95°, 90°, 85°, 80°, 75°, 70°, 65°, 60°, 55°, 50°, 45°, 40°, 35°, 30°, 25°, 20°, 15°, 10° oder kleiner als 5°.

Wird nun die Basisverstelleinrichtung 33 derart angesteuert, dass diese das Basisgestell 32 weg von der Aufwickelstation 4 verfährt und wird die erste Verstelleinrichtung 10 derart angesteuert, dass die Kontaktwalze 6 weg von der zweiten Umlenkwalze 21 verfahren wird, so wird der Umschlingungsgrad vergrößert. Wird dagegen die Basisverstelleinrichtung 33 derart angesteuert, dass diese das Basisgestell 32 in Richtung der Aufwickelstation 4 verfährt und wird die erste Verstelleinrichtung 10 derart angesteuert, dass die Kontaktwalze 6 in Richtung der zweiten Umlenkwalze 21 verfahren wird, so wird der Umschlingungsgrad verkleinert.

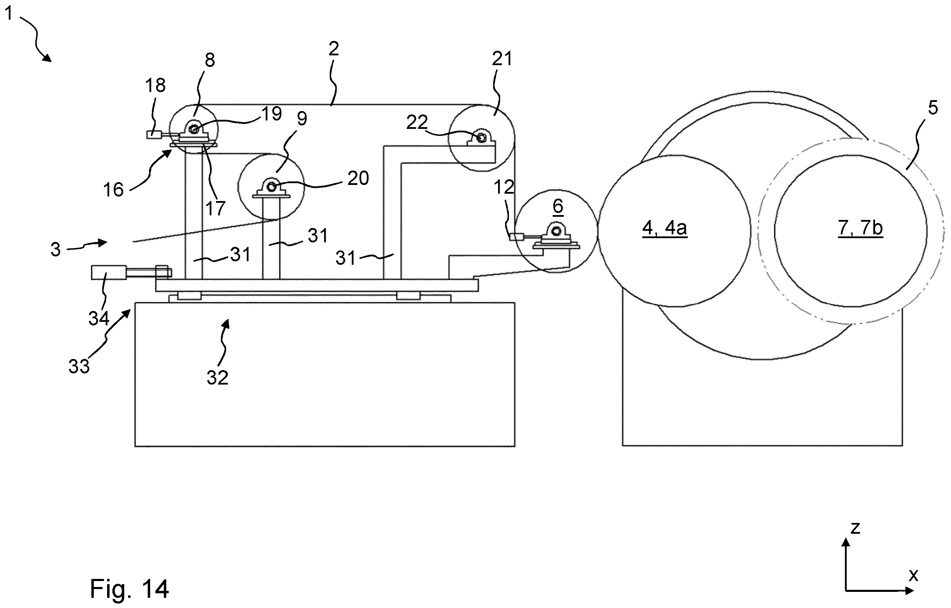

Figur 14 beschreibt ein Ausführungsbeispiel des Folienaufwickelsystems 1 wie es bereits aus Figur 13 bekannt ist. Im Unterschied zu Figur 13 dreht die Kontaktwalze 6 in die entgegengesetzte Richtung (gegen den Uhrzeigersinn). Die Folienbahn 2 verläuft zwischen der zweiten Umlenkwalze 21 und der Kontaktwalze 6 vorzugsweise lediglich in Vertikalrichtung, also senkrecht zum Boden. Die zweite Umlenkwalze 21 ist weiter vom Boden beabstandet als die Kontaktwalze 6. Der Umschlingungsgrad beträgt in diesem Fall ungefähr 180°. In diesem Fall ist das Zentrum der zweiten Umlenkwalze 21 weiter von der Aufwickelstation 4 beabstandet als das Zentrum der Kontaktwalze 6. Vorzugsweise verlässt die Folienbahn 2 die zweite Umlenkwalze 21 auf drei Uhr und erreicht die Kontaktwalze 6 auf neun Uhr. Nachdem die Kontaktwalze 6 die Folienbahn dann 180° mitnimmt, verlässt die Folienbahn 2 die Kontaktwalze 6 auf drei Uhr und wird der Aufwickelstation 4 zugeführt. Die Aufwickelstation 4 ist bezogen auf die Kontaktwalze 6 auf ungefähr 3 Uhr angeordnet. Die zweite Umlenkwalze 21 kann auch näher am Boden angeordnet sein als die Kontaktwalze 6. In diesem Fall würde sich die Kontaktwalze 6 im Uhrzeigersinn drehen.

Die Walzen bestehen vorzugsweise aus Metall bzw. einer Metalllegierung oder umfassen Metall oder einer Metalllegierung. Vorzugsweise wird Chrome eingesetzt. Alternativ können auch Walzen aus Kohlefaser-Verbundmaterial eingesetzt werden oder Kombinationen aus Metallwalzen und Kohlefaser-Verbundmaterial-Walzen.

Die Tänzerwalze 8 ist vorzugsweise frei von einem Pendel.

Die Geschwindigkeit der Folienbahn 2 an der Kontaktwalze beträgt ca. 10 bis 100 m/min
Erfindungsgemäß kann anstelle der ersten Verstelleinrichtung 10 an der Kontaktwalze 6 auch die zweite Verstelleinrichtung 16 an der Tänzerwalze 8 beansprucht werden. Grundsätzlich wäre es auch denkbar, dass anstelle der ersten Verstelleinrichtung 10 an der Kontaktwalze 6 auch die Radialluftlager 13, 19, 20, 22 an der Kontaktwalze 6, der Tänzerwalze 8, der ersten Umlenkwalze 9 und/oder an der zweiten Umlenkwalze 21 beansprucht werden.

Die Erfindung ist nicht auf die beschriebenen Ausführungsbeispiele beschränkt. Im Rahmen der beanspruchten Erfindung sind alle beschriebenen und/oder gezeichneten Merkmale beliebig miteinander kombinierbar.

## Patentansprüche

1. Folienaufwickelsystem (1) für eine Folienreckanlage (110) mit den folgenden Merkmalen:
- es ist ein Folieneintrittsbereich (3) vorgesehen, über den eine aufzuwickelnde Folienbahn (2) dem Folienaufwickelsystem (1) zuführbar ist;
- es ist eine erste Aufwickelstation (4) vorgesehen, wobei die erste Aufwickelstation (4) in einer Aufwickelposition dazu ausgebildet ist, um die Folienbahn (2) zu einem Folienballen (5) aufzuwickeln;
- es sind eine Kontaktwalze (6) und eine Tänzerwalze (8) vorgesehen, wobei die Kontaktwalze (6) benachbart zur ersten Aufwickelstation (4) in der Aufwickelposition angeordnet und dazu ausgebildet ist, die Folienbahn (2) zur ersten Aufwickelstation (4) zu führen;
- die Tänzerwalze (8) ist in Bewegungsrichtung der Folienbahn (2) vor der Kontaktwalze (6) angeordnet und dazu ausgebildet, die Folienbahn (2) zur Kontaktwalze (6) zu führen und einen Folienzug einzustellen;
- es ist eine erste Verstelleinrichtung (10) vorgesehen und dazu ausgebildet, um die Kontaktwalze (6) in Richtung der Aufwickelstation (4) oder weg von der Aufwickelstation (4) zu verfahren, wodurch ein bestimmter Kontaktdruck zwischen Kontaktwalze (6) und Folienballen (5) einstellbar ist;
- die erste Verstelleinrichtung (10) umfasst ein Schlittensystem oder eine Verstellspindel.

2. Folienaufwickelsystem (1) nach Anspruch 1, **gekennzeichnet durch** das folgende Merkmal:
- das Schlittensystem ist ein Luftlagerschlittensystem (11) oder hydrostatisches Lagerschlittensystem,
insbesondere **gekennzeichnet durch** die folgenden Merkmale:
- das Luftlagerschlittensystem (11) der ersten Verstelleinrichtung (10) umfasst eine erste Schiene (23) und zumindest einen ersten Schlitten (24) der auf der ersten Schiene (23) angeordnet ist;
- der erste Schlitten (23) umfasst Luftaustrittsöffnungen, die in Richtung der ersten Schiene (23) gerichtet sind;
- der erste Schlitten (24) umfasst einen Luftanschluss (25), um Druckluft zuführen zu können, die dann aus den Luftaustrittsöffnungen austritt, wodurch der erste Schlitten (24) auf der ersten Schiene (23) gleitend bewegbar ist,
insbesondere wobei der erste Schlitten (24) die erste Schiene (23) von zumindest drei Seiten umgreift.

3. Folienaufwickelsystem (1) nach Anspruch 2, **gekennzeichnet durch** die folgenden Merkmale:
- das Luftlagerschlittensystem (11) der ersten Verstelleinrichtung (10) umfasst eine zweite Schiene (26) und zumindest einen zweiten Schlitten (27) der auf der zweiten Schiene (26) angeordnet ist;
- der zweite Schlitten (27) umfasst Luftaustrittsöffnungen, die in Richtung der zweiten Schiene (26) gerichtet sind;
- der zweite Schlitten (27) umfasst einen Luftanschluss (28), um Druckluft zuführen zu können, die dann aus den Luftaustrittsöffnungen austritt, wodurch der zweite Schlitten (27) auf der zweiten Schiene (26) gleitend bewegbar ist;
- die zweite Schiene (26) verläuft parallel zur ersten Schiene (23).

4. Folienaufwickelsystem (1) nach Anspruch 2 oder 3, **gekennzeichnet durch** die folgenden Merkmale:
- das Luftlagerschlittensystem (11) der ersten Verstelleinrichtung (10) umfasst einen dritten Schlitten der auf der ersten Schiene (23) angeordnet ist;
- der dritte Schlitten umfasst Luftaustrittsöffnungen, die in Richtung der ersten Schiene (23) gerichtet sind;
- der dritte Schlitten umfasst einen Luftanschluss, um Druckluft zuführen zu können, die dann aus den Luftaustrittsöffnungen austritt, wodurch der dritte Schlitten auf der ersten Schiene (23) gleitend bewegbar ist;
- die erste Schiene (23) hat einen durchgehenden Verlauf oder ist in zwei beabstandete Teilschienen für den ersten und dritten Schlitten (24) aufgeteilt.

5. Folienaufwickelsystem (1) nach einem der vorherigen Ansprüche, **gekennzeichnet durch** die folgenden Merkmale:
- die erste Verstelleinrichtung (10) umfasst:
a) ein erstes und ein zweites Radialluftlager (13); oder
b) ein erstes und ein zweites hydrostatisches Lager;
- die Kontaktwalze (6) umfasst im Bereich der ersten und zweiten Stirnseite (14) erste und zweite Walzenzapfen (15), die in dem ersten und zweiten Radialluftlager (13) oder hydrostatischen Lager gelagert sind.

6. Folienaufwickelsystem (1) nach einem der vorherigen Ansprüche, **gekennzeichnet durch** das folgende Merkmal:
- die erste Verstelleinrichtung (10) umfasst einen Linearmotor (12), der dazu ausgebildet ist, die Kontaktwalze (6) über das Schlittensystem in Richtung der ersten Aufwickelstation (4) oder weg von der ersten Aufwickelstation (4) zu bewegen; oder
- die erste Verstelleinrichtung (10) umfasst einen Elektromotor, der dazu ausgebildet ist, die Verstellspindel zu drehen, wodurch die Kontaktwalze (6) in Richtung der ersten Aufwickelstation (4) oder weg von der ersten Aufwickelstation (4) bewegbar ist,
insbesondere **gekennzeichnet durch** das folgende Merkmal:
- es ist eine Steuervorrichtung vorgesehen, die dazu ausgebildet ist, um den Linearmotor (12) oder den Elektromotor der ersten Verstelleinrichtung (10) derart anzusteuern, dass die Kontaktwalze (6) mit einem vorbestimmten Anpressdruck an dem Folienballen (5) anliegt.

7. Folienaufwickelsystem (1) nach einem der vorherigen Ansprüche, **gekennzeichnet durch** die folgenden Merkmale:
- es ist eine erste Umlenkwalze (9) vorgesehen;
- die erste Umlenkwalze (9) ist in Bewegungsrichtung der Folienbahn (2) vor der Tänzerwalze (8) angeordnet
insbesondere **gekennzeichnet durch** eines oder beide der folgenden Merkmale:
- ein Abstand zwischen der ersten Umlenkwalze (9) und der Kontaktwalze (6) ist kleiner als ein Abstand zwischen der Tänzerwalze (8) und der Kontaktwalze (6); und/oder
- die erste Umlenkwalze (9) ist mittels Radialluftlager (20) oder hydrostatischen Lagern drehbar gelagert.

8. Folienaufwickelsystem (1) nach einem der vorherigen Ansprüche, **gekennzeichnet durch** die folgenden Merkmale:
- es ist eine zweite Umlenkwalze (21) vorgesehen;
- die zweite Umlenkwalze (21) ist in Bewegungsrichtung der Folienbahn (2) nach der Tänzerwalze (8) und vor der Kontaktwalze (6) angeordnet
insbesondere **gekennzeichnet durch** das folgende Merkmal:
- die zweite Umlenkwalze (21) ist mittels Radialluftlager (22) oder hydrostatischen Lagern drehbar gelagert.

9. Folienaufwickelsystem (1) nach einem der vorherigen Ansprüche, **gekennzeichnet durch** die folgenden Merkmale:
- es ist ein Kontaktwalzengestell (30) vorgesehen;
- das Schlittensystem der ersten Verstelleinrichtung (10) oder die Verstellspindel ist auf dem Kontaktwalzengestell (30) angeordnet, sodass die Kontaktwalze (6) gegenüber dem Kontaktwalzengestell (30) verfahrbar ist; oder
das Kontaktwalzengestell (30) ist auf dem Schlittensystem oder der Verstellspindel der ersten Verstelleinrichtung (10) angeordnet, wobei die Kontaktwalze (6) auf dem Kontaktwalzengestell (30) angeordnet ist, sodass die Kontaktwalze (6) und das Kontaktwalzengestell (30) gemeinsam verfahrbar sind,
insbesondere **gekennzeichnet durch** das folgende Merkmal:
- die erste Umlenkwalze (9) und/oder die zweite Umlenkwalze (21) und/oder die Tänzerwalze (8) sind auf dem Kontaktwalzengestell (30) angeordnet.

10. Folienaufwickelsystem (1) nach einem der Ansprüche 1 bis 8, **gekennzeichnet durch** das folgende Merkmal:
- es ist eine Basisverstelleinrichtung (33) vorgesehen, die ein Basisgestell (32) und ein Luftlagerschlittensystem oder ein hydrostatisches Lagerschlittensystem oder eine Verstellspindel (34) umfasst;
- die Kontaktwalze (6) und die Tänzerwalze (7) und die erste Umlenkwalze (9) und/oder die zweite Umlenkwalze (21) sind auf dem Basisgestell (32) angeordnet;
- die Basisverstelleinrichtung (33) ist dazu ausgebildet, um die Kontaktwalze (6), die Tänzerwalze (7), die erste Umlenkwalze (9) und/oder die zweite Umlenkwalze (21) in Richtung der Aufwickelstation (4) oder weg von der Aufwickelstation (4) zu verfahren.

11. Folienaufwickelsystem (1) nach einem der vorherigen Ansprüche, **gekennzeichnet durch** die folgenden Merkmale:
- es ist eine zweite Verstelleinrichtung (16) vorgesehen und dazu ausgebildet, um die Tänzerwalze (8) in Richtung der Kontaktwalze (6) oder weg von der Kontaktwalze (6) zu verfahren, wodurch ein bestimmter Folienzug einstellbar ist;
- die zweite Verstelleinrichtung (16) umfasst ein Luftlagerschlittensystem (17) oder ein hydrostatisches Lagerschlittensystem oder eine Verstellspindel,
insbesondere **gekennzeichnet durch** die folgenden Merkmale:
- das Luftlagerschlittensystem (17) der zweiten Verstelleinrichtung (16) umfasst eine erste Schiene und zumindest einen ersten Schlitten der auf der ersten Schiene angeordnet ist;
- der erste Schlitten umfasst Luftaustrittsöffnungen, die in Richtung der ersten Schiene gerichtet sind;
- der erste Schlitten umfasst einen Luftanschluss, um Druckluft zuführen zu können, die dann aus den Luftaustrittsöffnungen austritt, wodurch der erste Schlitten auf der ersten Schiene gleitend bewegbar ist.

12. Folienaufwickelsystem (1) nach Anspruch 11, **gekennzeichnet durch** das folgende Merkmal:
- die zweite Verstelleinrichtung (16) umfasst einen Linearmotor (18), der dazu ausgebildet ist, um die Tänzerwalze (8) über das Luftlagerschlittensystem (17) oder das hydrostatische Lagerschlittensystem in Richtung der Kontaktwalze (6) oder weg von der Kontaktwalze (6) zu bewegen; oder
- die zweite Verstelleinrichtung umfasst einen Elektromotor, der dazu ausgebildet ist, die Verstellspindel zu drehen, wodurch die Tänzerwalze (8) in Richtung der ersten Aufwickelstation (4) oder weg von der ersten Aufwickelstation (4) bewegbar ist,
insbesondere **gekennzeichnet durch** das folgende Merkmal:
- es ist eine Steuervorrichtung vorgesehen, die dazu ausgebildet ist, um den Linearmotor (18) oder den Elektromotor der zweiten Verstelleinrichtung (16) derart anzusteuern, dass über die Tänzerwalze (8) ein vorbestimmter Folienzug aufbringbar ist.

13. Folienaufwickelsystem (1) nach einem der vorherigen Ansprüche, **gekennzeichnet durch** die folgenden Merkmale:
- die Tänzerwalze (8) ist mittels Radialluftlager (19) oder hydrostatischem Lager drehbar gelagert,
und/oder **gekennzeichnet durch** die folgenden Merkmale:
- die erste Aufwickelstation (4) umfasst einen Grundkörper (4a), wobei der Grundkörper (4a) der ersten Aufwickelstation (4) in eine Rotationsbewegung versetzbar ist und wobei die Folienbahn (2) um den Grundkörper (4a) herum aufwickelbar ist;
- es ist eine zweite Aufwickelstation (7) mit einem Grundkörper (7a) vorgesehen, wobei der Grundkörper (7a) der zweiten Aufwickelstation (7) in eine Rotationsbewegung versetzbar ist und wobei die Folienbahn (2) um den Grundkörper (7a) herum aufwickelbar ist;
- die erste Aufwickelstation (4) ist dazu ausgebildet, um von der Aufwickelposition, in welcher sie benachbart zu der Kontaktwalze (6) angeordnet ist, in eine Abladeposition verschwenkt zu werden, wobei der aufgewickelte Folienballen (5) in der Abladeposition von der ersten Aufwickelstation (4) entfernbar ist, wobei die zweite Aufwickelstation (7) dazu ausgebildet ist, zur selben Zeit von der Abladeposition in die Aufwickelposition verschwenkt zu werden;
- es ist eine Schneideeinrichtung vorgesehen;
- die Schneideeinrichtung ist dazu ausgebildet, die Folienbahn (2) dann über ihre Breite durchzuschneiden, wenn die erste Aufwickelstation (4) in Richtung der Abladeposition verschwenkt wird, wobei die zweite Aufwickelstation (7) dazu ausgebildet ist, derart weiter in die Aufwickelposition verschwenkt zu werden, sodass der Grundkörper (7a) der zweiten Aufwickelstation (7) sofort mit dem nun entstandenen neuen Anfang der Folienbahn (2) in Kontakt gelangt;
und/oder **gekennzeichnet durch** die folgenden Merkmale:
- es ist zumindest eine Entladevorrichtung vorgesehen;
- die Entladevorrichtung ist im Bereich der Folienbahn (2) angeordnet und dazu ausgebildet, elektrische Ladung auf der Folienbahn (2) und/oder dem Folienballen (5) abzubauen.

14. Verbund (100) aus einer Folienreckanlage (110) und dem Folienaufwickelsystem (1) nach einem der vorherigen Ansprüche, **gekennzeichnet durch** die folgenden Merkmale:
- der Folienreckanlage (110) ist an ihrem Eingangsbereich (111) eine Kunststoffschmelze zuführbar;
- die Folienreckanlage (110) umfasst verschiedene Zonen (110a, 110b, 110c, 110d, 110e), in denen die Kunststoffschmelze aufgeheizt und/oder zu der Folienbahn (2) gereckt wird;
- ein Ausgangsbereich (112) der Folienreckanlage (110) ist mit dem Folieneintrittsbereich (3) des Folienaufwickelsystems (1) verbunden.

15. Verwendung des Verbunds gemäß Anspruch 14 um eine Batterieseparatorfolie herzustellen und aufzuwickeln.

## Claims

1. Film winding system (1) for a film stretching unit (110) comprising the following features:
- a film entry area (3) is provided, via which a film web (2) to be wound up is feedable to the film winding system (1);
- a first winding station (4) is provided, wherein the first winding station (4) is configured in a winding position to wind the film web (2) into a film bale (5);
- a contact roller (6) and a compensating roller (8) are provided, wherein the contact roller (6) is arranged adjacent to the first winding station (4) in the winding position and is configured to guide the film web (2) to the first winding station (4);
- the compensating roller (8) is located before the contact roller (6) in the direction of travel of the film web (2) and is configured to guide the film web (2) to the contact roller (6) and to set a film tension;
- a first adjustment device (10) is provided and configured to move the contact roller (6) towards the winding station (4) or away from the winding station (4), thereby enabling the setting of a specific contact pressure between the contact roller (6) and the film bale (5);
- the first adjustment device (10) comprises a slide system or an adjusting spindle.

2. Film winding system (1) according to claim 1, **characterised by** the following feature:
- the slide system is an air-bearing slide system (11) or a hydrostatic-bearing slide system,
in particular **characterised by** the following features:
- the air-bearing slide system (11) of the first adjustment device (10) comprises a first rail (23) and at least a first slide (24) that is located on the first rail (23);
- the first slide (24) comprises air outlet openings that are directed in the direction of the first rail (23);
- the first slide (24) comprises an air connection (25) to allow the feeding of compressed air that then exits the air outlet openings, thereby enabling the first slide (24) to be slidable on the first rail (23),
in particular wherein the first slide (24) grasps the first rail (23) on at least three sides.

3. Film winding system (1) according to claim 2, **characterised by** the following features:
- the air-bearing slide system (11) of the first adjustment device (10) comprises a second rail (26) and at least a second slide (27) that is located on the second rail (26);
- the second slide (27) comprises air outlet openings that are directed in the direction of the second rail (26);
- the second slide (27) comprises an air connection (28) to allow the feeding of compressed air that then exits the air outlet openings, thereby enabling the second slide (27) to be slidable on the second rail (26);
- the second rail (26) runs parallel to the first rail (23).

4. Film winding system (1) according to claim 2 or 3, **characterised by** the following features:
- the air-bearing slide system (11) of the first adjustment device (10) comprises a third slide which is located on the first rail (23);
- the third slide comprises air outlet openings that are directed in the direction of the first rail (23);
- the third slide comprises an air connection to allow the feeding of compressed air that then exits the air outlet openings, thereby enabling the third slide to be slidable on the first rail (23);
- the first rail (23) runs continuously or is divided into two rail sections for the first and the third slides (24), said rail sections being are spaced apart.

5. Film winding system (1) according to any one of the previous claims, **characterised by** the following features:
- the first adjustment device (10) comprises:
a) a first and a second radial air bearing (13); or
b) a first and a second hydrostatic bearing;
- the contact roller (6) comprises first and second journals (15) in the area of the first and the second end face (14), said journals (15) being supported in the first and second radial air bearings (13) or hydrostatic bearings.

6. Film winding system (1) according to any one of the previous claims, **characterised by** the following feature:
- the first adjustment device (10) also comprises a linear motor (12) that is configured to move the contact roller (6) via the slide system towards the first winding station (4) or away from the first winding station (4); or
- the first adjustment device (10) comprises an electric motor that is configured to rotate the adjusting spindle, thereby enabling the contact roller (6) to be moveable towards the first winding station (4) or away from the first winding station (4),
in particular **characterised by** the following feature:
- a control device is provided that is configured to control the linear motor (12) or the electric motor of the first adjustment device (10) in such a way that the contact roller (6) rests on the film bale (5) at a predetermined contact pressure.

7. Film winding system (1) according to any one of the previous claims, **characterised by** the following features:
- a first deflection roller (9) is provided;
- the first deflection roller (9) is located in the direction of travel of the film web (2) before the compensating roller (8),
in particular **characterised by** one or both of the following features:
- a distance between the first deflection roller (9) and the contact roller (6) is less than a distance between the compensating roller (8) and the contact roller (6); and/or
- the first deflection roller (9) is mounted rotatably by means of radial air bearings (20) or hydrostatic bearings.

8. Film winding system (1) according to any one of the previous claims, **characterised by** the following features:
- a second deflection roller (21) is provided;
- the second deflection roller (21) is located in the direction of travel of the film web (2) after the compensating roller (8) and before the contact roller (6),
in particular **characterised by** the following feature:
- the second deflection roller (21) is mounted rotatably by means of radial air bearings (22) or hydrostatic bearings.

9. Film winding system (1) according to any one of the previous claims, **characterised by** the following features:
- a contact roller frame (30) is provided;
- the slide system of the first adjustment device (10) or the adjusting spindle is located on the contact roller frame (30) so that the contact roller (6) is moveable relative to the contact roller frame (30); or
the contact roller frame (30) is located on the slide system or the adjusting spindle of the first adjustment device (10), wherein the contact roller (6) is located on the contact roller frame (30) so that the contact roller (6) and the contact roller frame (30) are moveable collectively,
in particular **characterised by** the following feature:
- the first deflection roller (9) and the second deflection roller (21) and/or the compensating roller (8) are located on the contact roller frame (30).

10. Film winding system (1) according to any one of the claims 1 to 8, **characterised by** the following feature:
- a base adjustment device (33) is provided that comprises a base frame (32) and an air-bearing slide system or a hydrostatic-bearing slide system or an adjusting spindle (34);
- the contact roller (6) and the compensating roller (8) and the first deflection roller (9) and/or the second deflection roller (21) are located on the base frame (32) ;
- the base adjustment device (33) is configured to move the contact roller (6), the compensating roller (8), the first deflection roller (9) and/or the second deflection roller (21) towards the winding station (4) or away from the winding station (4).

11. Film winding system (1) according to any one of the previous claims, **characterised by** the following features:
- a second adjustment device (16) is provided and configured to move the compensating roller (8) towards the contact roller (6) or away from the contact roller (6), thereby enabling the setting of a specific film tension;
- the second adjustment device (16) comprises an air-bearing slide system (17) or a hydrostatic-bearing slide system or an adjusting spindle,
in particular **characterised by** the following features:
- the air-bearing slide system (17) of the second adjustment device (16) comprises a first rail and at least a first slide that is located on the first rail;
- the first slide comprises air outlet openings that are directed in the direction of the first rail;
- the first slide comprises an air connection to allow the feeding of compressed air that then exits the air outlet openings, thereby enabling the first slide to be slidable on the first rail.

12. Film winding system (1) according to claim 11, **characterised by** the following feature:
- the second adjustment device (16) comprises a linear motor (18) that is configured to move the compensating roller (8) via the air-bearing slide system (17) or the hydrostatic-bearing slide system towards the contact roller (6) or away from the contact roller (6); or
- the second adjustment device (16) comprises an electric motor that is configured to rotate the adjusting spindle, thereby enabling the compensating roller (8) to be moveable towards the first winding station (4) or away from the first winding station (4),
in particular **characterised by** the following feature:
- a control device is provided that is configured to control the linear motor (18) or the electric motor of the second adjustment device (16) in such a way that a predetermined film tension is appliable via the compensating roller (8).

13. Film winding system (1) according to any one of the previous claims, **characterised by** the following features:
- the compensating roller (8) is mounted rotatably by means of radial air bearings (19) or hydrostatic bearings,
and/or **characterised by** the following features:
- the first winding station (4) comprises a base body (4a), wherein the base body (4a) of the first winding station (4) is rotationally displaceable and wherein the film web (2) is windable around the base body (4a);
- a second winding station (7) comprising a base body (7a), wherein the base body (7a) of the second winding station (7) is rotationally displaceable and wherein the film web (2) is windable around the base body (7a);
- the first winding station (4) is configured to be pivoted from the winding position, in which it is arranged adjacent to the contact roller (6), into an unloading position, wherein the wound film bale (5) is removable from the first winding station (4) in the unloading position, wherein the second winding station (7) is configured to be pivoted at the same time from the unloading position into the winding position;
- a cutting device is provided;
- a cutting device is configured to cut the film web (2) across its width when the first winding station (4) is pivoted in the direction of the unloading position, wherein the second winding station (7) is configured to be pivoted further into the winding position in such a way that the base body (7a) of the second winding station (7) immediately comes into contact with the new beginning of the film web (2) now formed;
and/or **characterised by** the following features:
- at least one discharge device is provided;
- the discharge device is located in the area of the film web (2) and is configured to discharge electrical charge on the film web (2) and/or film bale (5).

14. Assembly (100) comprising a film stretching unit (110) and a film winding system (1) according to any one of the previous claims, **characterised by** the following features:
- a plastic melt is feedable at the entry area (111) of the film stretching unit (110);
- the film stretching unit (110) comprises different zones (110a, 110b, 110c, 110d and 110e) in which the plastic melt is heated and/or the film web (2) is stretched;
- an exit area (112) of the film stretching unit (110) is connected to the film entry area (3) of the film winding system (1).

15. Use of the assembly according to claim 14 to produce and wind a battery separator film.

## Revendications

1. Système d'enroulement de feuille (1) pour une installation d'étirage de feuille (110) présentant les particularités suivantes :
- il est prévu une zone d'entrée de feuille (3) par laquelle une bande de feuille (2) à enrouler peut être apportée au système d'enroulement de feuille (1) ;
- il est prévu un premier poste d'enroulement (4), lequel premier poste d'enroulement (4) est conçu, en position d'enroulement, pour enrouler la bande de feuille (2) en un enroulement de feuille (5) ;
- il est prévu un rouleau de contact (6) et un rouleau danseur (8), le rouleau de contact (6) étant disposé à côté du premier poste d'enroulement (4) dans la position d'enroulement et étant conçu pour guider la bande de feuille (2) vers le premier poste d'enroulement (4) ;
- le rouleau danseur (8) est disposé en amont du rouleau de contact (6), dans le sens de déplacement de la bande de feuille (2), et est conçu pour guider la bande de feuille (2) vers le rouleau de contact (6) et pour régler une tension de feuille ;
- il est prévu un premier dispositif de déplacement (10) conçu pour rapprocher le rouleau de contact (6) du poste d'enroulement (4) ou l'écarter du poste d'enroulement (4), permettant de régler une certaine pression de contact entre le rouleau de contact (6) et l'enroulement de feuille (5) ;
- le premier dispositif de déplacement (10) comprend un système de chariots ou une broche de réglage.

2. Système d'enroulement de feuille (1) selon la revendication 1, **caractérisé par** la particularité suivante :
- le système de chariots est un système de chariots à paliers à air (11) ou un système de chariots à paliers hydrostatiques ;
caractérisé notamment par les particularités suivantes :
- le système de chariots à paliers à air (11) du premier dispositif de déplacement (10) comprend un premier rail (23) et au moins un premier chariot (24) disposé sur le premier rail (23) ;
- le premier chariot (23) comprend des ouvertures de sortie d'air dirigées vers le premier rail (23) ;
- le premier chariot (24) comprend un raccord d'air (25) destiné à fournir de l'air comprimé qui sort ensuite des ouvertures de sortie d'air, permettant au premier chariot (24) d'être mobile en coulissement sur le premier rail (23),
ledit premier chariot (24) entourant notamment le premier rail (23) sur au moins trois côtés.

3. Système d'enroulement de feuille (1) selon la revendication 2, **caractérisé par** les particularités suivantes :
- le système de chariots à paliers à air (11) du premier dispositif de déplacement (10) comprend un deuxième rail (26) et au moins un deuxième chariot (27) disposé sur le deuxième rail (26) ;
- le deuxième chariot (27) comprend des ouvertures de sortie d'air dirigées vers le deuxième rail (26) ;
- le deuxième chariot (27) comprend un raccord d'air (28) destiné à fournir de l'air comprimé qui sort ensuite des ouvertures de sortie d'air, permettant au deuxième chariot (27) d'être mobile en coulissement sur le deuxième rail (26) ;
- le deuxième rail (26) est parallèle au premier rail (23).

4. Système d'enroulement de feuille (1) selon la revendication 2 ou 3, **caractérisé par** les particularités suivantes :
- le système de chariots à paliers à air (11) du premier dispositif de déplacement (10) comprend un troisième chariot disposé sur le premier rail (23) ;
- le troisième chariot comprend des ouvertures de sortie d'air dirigées vers le premier rail (23) ;
- le troisième chariot comprend un raccord d'air destiné à fournir de l'air comprimé qui sort ensuite des ouvertures de sortie d'air, permettant au troisième chariot d'être mobile en coulissement sur le premier rail (23) ;
- le premier rail (23) présente une configuration continue ou est divisé en deux rails partiels espacés pour les premier et troisième chariots (24).

5. Système d'enroulement de feuille (1) selon l'une des revendications précédentes, **caractérisé par** les particularités suivantes :
- le premier dispositif de déplacement (10) comprend :
a) un premier et un deuxième palier à air radial (13), ou
b) un premier et un deuxième palier hydrostatique ;
- le rouleau de contact (6) comprend un premier et un deuxième tourillon de cylindre (15) au niveau des première et deuxième faces terminales (14), qui sont montés dans les premier et deuxième paliers à air radiaux (13) ou paliers hydrostatiques.

6. Système d'enroulement de feuille (1) selon l'une des revendications précédentes, **caractérisé par** la particularité suivante :
- le premier dispositif de déplacement (10) comprend un moteur linéaire (12) conçu pour rapprocher le rouleau de contact (6) du premier poste d'enroulement (4) ou l'écarter du premier poste d'enroulement (4) grâce au système de chariots ; ou
- le premier dispositif de déplacement (10) comprend un moteur électrique conçu pour faire tourner la broche de réglage, permettant de rapprocher le rouleau de contact (6) du premier poste d'enroulement (4) ou de l'écarter du premier poste d'enroulement (4) ;
caractérisé notamment par la particularité suivante :
- il est prévu un dispositif de commande conçu pour commander le moteur linéaire (12) ou le moteur électrique du premier dispositif de déplacement (10) de telle façon que le rouleau de contact (6) est en appui sur l'enroulement de feuille (5) avec une pression de contact prédéterminée.

7. Système d'enroulement de feuille (1) selon l'une des revendications précédentes, **caractérisé par** les particularités suivantes :
- il est prévu un premier rouleau de renvoi (9) ;
- le premier rouleau de renvoi (9) est disposé en amont du rouleau danseur (8), dans le sens de déplacement de la bande de feuille (2) ;
caractérisé notamment par l'une ou les deux particularités suivantes :
- l'écart entre le premier rouleau de renvoi (9) et le rouleau de contact (6) est inférieur à l'écart entre le rouleau danseur (8) et le rouleau de contact (6), et/ou
- le premier rouleau de renvoi (9) est monté rotatif au moyen de paliers à air radiaux (20) ou de paliers hydrostatiques.

8. Système d'enroulement de feuille (1) selon l'une des revendications précédentes, **caractérisé par** les particularités suivantes :
- il est prévu un deuxième rouleau de renvoi (21) ;
- le deuxième rouleau de renvoi (21) est disposé en aval du rouleau danseur (8) et en amont du rouleau de contact (6), dans le sens de déplacement de la bande de feuille (2) ;
caractérisé notamment par la particularité suivante :
- le deuxième rouleau de renvoi (21) est monté rotatif au moyen de paliers à air radiaux (22) ou de paliers hydrostatiques.

9. Système d'enroulement de feuille (1) selon l'une des revendications précédentes, **caractérisé par** les particularités suivantes :
- il est prévu un bâti de rouleau de contact (30) ;
- le système de chariots du premier dispositif de déplacement (10) ou la broche de réglage est disposé(e) sur le bâti de rouleau de contact (30) de façon que le rouleau de contact (6) est mobile par rapport au bâti de rouleau de contact (30) ; ou
le bâti de rouleau de contact (30) est disposé sur le système de chariots ou sur la broche de réglage du premier dispositif de déplacement (10), le rouleau de contact (6) étant disposé sur le bâti de rouleau de contact (30) de façon que le rouleau de contact (6) et le bâti de rouleau de contact (30) sont conjointement mobiles,
caractérisé notamment par la particularité suivante :
- le premier rouleau de renvoi (9) et/ou le deuxième rouleau de renvoi (21) et/ou le rouleau danseur (8) sont disposés sur le bâti de rouleau de contact (30).

10. Système d'enroulement de feuille (1) selon l'une des revendications 1 à 8, **caractérisé par** la particularité suivante :
- il est prévu un dispositif de déplacement de base (33) qui comprend un bâti de base (32) et un système de chariots à paliers à air ou un système à chariots à paliers hydrostatiques ou une broche de réglage (34) ;
- le rouleau de contact (6) et le rouleau danseur (7) ainsi que le premier rouleau de renvoi (9) et/ou le deuxième rouleau de renvoi (21) sont disposés sur le châssis de base (32) ;
- le dispositif de déplacement de base (33) est conçu pour rapprocher le rouleau de contact (6), le rouleau danseur (7), le premier rouleau de renvoi (9) et/ou le deuxième rouleau de renvoi (21) du poste d'enroulement (4) ou les écarter du poste d'enroulement (4).

11. Système d'enroulement de feuille (1) selon l'une des revendications précédentes, **caractérisé par** les particularités suivantes :
- il est prévu un deuxième dispositif de déplacement (16) conçu pour rapprocher le rouleau danseur (8) du rouleau de contact (6) ou l'écarter du rouleau de contact (6), permettant de régler une certaine tension de feuille ;
- le deuxième dispositif de déplacement (16) comprend un système de chariots à paliers à air (17) ou un système de chariots à paliers hydrostatiques ou une broche de réglage ;
caractérisé notamment par les particularités suivantes :
- le système de chariots à paliers à air (17) du deuxième dispositif de déplacement (16) comprend un premier rail et au moins un premier chariot disposé sur le premier rail ;
- le premier chariot comporte des ouvertures de sortie d'air dirigées vers le premier rail ;
- le premier chariot comprend un raccord d'air destiné à fournir de l'air comprimé qui sort ensuite des ouvertures de sortie d'air, permettant au premier chariot d'être mobile en coulissement sur le premier rail.

12. Système d'enroulement de feuille (1) selon la revendication 11, **caractérisé par** la particularité suivante :
- le deuxième dispositif de déplacement (16) comprend un moteur linéaire (18) conçu pour rapprocher le rouleau danseur (8) du rouleau de contact (6) ou l'écarter du rouleau de contact (6) grâce au système de chariots à paliers à air (17) ou au système de chariots à paliers hydrostatiques ; ou
- le deuxième dispositif de déplacement comprend un moteur électrique conçu pour faire tourner la broche de réglage, permettant de rapprocher le rouleau danseur (8) du premier poste d'enroulement (4) ou de l'écarter du premier poste d'enroulement (4),
caractérisé notamment par la particularité suivante :
- il est prévu un dispositif de commande conçu pour commander le moteur linéaire (18) ou le moteur électrique du deuxième dispositif de déplacement (16) de telle façon qu'une tension de feuille prédéterminée puisse être appliquée grâce au rouleau danseur (8).

13. Système d'enroulement de feuille (1) selon l'une des revendications précédentes, **caractérisé par** les particularités suivantes :
- le rouleau danseur (8) est monté rotatif au moyen de paliers à air radiaux (19) ou de paliers hydrostatiques,
et/ou **caractérisé par** les particularités suivantes :
- le premier poste d'enroulement (4) comprend un corps de base (4a), ledit corps de base (4a) du premier poste d'enroulement (4) pouvant être mis en rotation et la bande de feuille (2) pouvant être enroulée autour du corps de base (4a) ;
- il est prévu un deuxième poste d'enroulement (7) doté d'un corps de base (7a), ledit corps de base (7a) du deuxième poste d'enroulement (7) pouvant être mis en rotation et la bande de feuille (2) pouvant être enroulée autour du corps de base (7a) ;
- le premier poste d'enroulement (4) est conçu pour pivoter depuis la position d'enroulement, dans laquelle il est disposé à côté du rouleau de contact (6), vers une position de déchargement dans laquelle l'enroulement de feuille enroulée (5) peut être retiré du premier poste d'enroulement (4), le deuxième poste d'enroulement (7) étant conçu pour pivoter en même temps de la position de déchargement à la position d'enroulement ;
- il est prévu un dispositif de coupe ;
- le dispositif de coupe est conçu pour couper la bande de feuille (2) sur toute sa largeur lorsque le premier poste d'enroulement (4) subit un pivotement vers la position de déchargement, le deuxième poste d'enroulement (7) étant conçu pour pivoter encore vers la position d'enroulement afin le corps de base (7a) du deuxième poste d'enroulement (7) entre immédiatement en contact avec la nouvelle entame de la bande de feuille (2) alors créée ;
et/ou **caractérisé par** les particularités suivantes :
- il est prévu au moins un dispositif de décharge ;
- le dispositif de décharge est disposé au niveau de la bande de feuille (2) et est conçu pour réduire la charge électrique présente sur la bande de feuille (2) et/ou sur l'enroulement de feuille (5).

14. Ensemble (100) constitué d'une installation d'étirage de feuille (110) et du système d'enroulement de feuille (1) selon l'une des revendications précédentes, **caractérisé par** les particularités suivantes :
- une matière plastique fondue peut être apportée à l'installation d'étirage de feuille (110) au niveau de sa zone d'entrée (111) ;
- l'installation d'étirage de feuille (110) comprend diverses zones (110a, 110b, 110c, 110d, 110e) dans lesquelles la matière plastique fondue est chauffée et/ou étirée pour former la bande de feuille (2) ;
- une zone de sortie (112) de l'installation d'étirage de feuille (110) est reliée à la zone d'entrée de feuille (3) du système d'enroulement de feuille (1).

15. Utilisation de l'ensemble selon la revendication 14 pour produire et enrouler une feuille séparatrice de batterie.
